(19) Europäisches Patentamt
European Patent Office
Office européen des brevets

(11) Veröffentlichungsnummer: **0 131 545**
**B1**

(12) # EUROPÄISCHE PATENTSCHRIFT

(45) Veröffentlichungstag der Patentschrift: **20.04.88**

(51) Int. Cl.[4]: **C 09 B 62/002,** D 06 P 3/66

(21) Anmeldenummer: **84810332.1**

(22) Anmeldetag: **03.07.84**

(54) **Reaktivfarbstoffe, deren Herstellung und Verwendung.**

(30) Priorität: **08.07.83 CH 3767/83**

(43) Veröffentlichungstag der Anmeldung: **16.01.85 Patentblatt 85/3**

(45) Bekanntmachung des Hinweises auf die Patenterteilung: **20.04.88 Patentblatt 88/16**

(84) Benannte Vertragsstaaten: **CH DE FR GB IT LI**

(56) Entgegenhaltungen:
**FR - A - 2 167 635**
**FR - A - 2 392 084**

(73) Patentinhaber: **CIBA-GEIGY AG, Klybeckstrasse 141, CH-4002 Basel (CH)**

(72) Erfinder: **Scheibli, Peter, Dr., Nussbaumweg 3, CH-4103 Bottmingen (CH)**
Erfinder: **Seitz, Karl, Dr., Schützenweg 9, CH-4104 Oberwil (CH)**
Erfinder: **Seiler, Herbert, Dr., Leimgrubenweg 60, CH-4125 Riehen (CH)**
Erfinder: **Markert, Jürgen, Dr., Im Guntengarten 32, CH-4107 Ettingen (CH)**
Erfinder: **Käser, Adolf, Dr., Spitzackerstrasse 118, CH-4103 Bottmingen (CH)**

**EP 0 131 545 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bisreaktiven Farbstoffen die gestellte Aufgabe gelöst wird.

Gegenstand der vorliegenden Erfindung sind Reaktivfarbstoffe der Formel

$$X_1-\underset{R_1}{\underset{|}{N}}-D-\underset{R_2}{\underset{|}{N}}-X_2 \qquad (1),$$

worin D der Rest eines Farbstoffes der Mono- oder Polyazo- oder Metallkomplexazo-Reihe, $R_1$ und $R_2$ unabhängig voneinander Wasserstoff oder ein gegebenenfalls substituierter $C_{1-4}$-Alkylrest, $X_1$ der 2,4-Difluor-5-chlorpyrimidin-Rest oder ein Rest der Formel

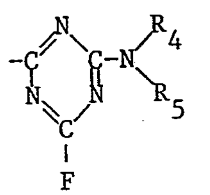

(B)

worin $R_4$ und $R_5$ unabhängig voneinander Wasserstoff, $C_{1-4}$-Alkyl, das gegebenenfalls durch Halogen, Cyan, $C_{1-4}$-Alkoxy, Hydroxy, Carboxy, Sulfo oder Sulfato substituiert ist, Benzyl, Phenäthyl, Cyclohexyl, Phenyl, das gegebenfalls durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo substituiert ist, oder Naphthyl, das gegebenenfalls durch Halogen, Nitro, $C_{1-4}$-Alkoxy, $C_{1-4}$-Alkanoylamino, Hydroxy, Carboxy oder Sulfo substituiert ist, oder worin $R_4$ und $R_5$ zusammen mit dem Aminostickstoffatom einen Morpholino-, Piperidino- oder Piperazinorest bilden, oder worin $-NR_4R_5$ Hydrazino oder Semicarbazido ist, wobei der Rest $-N(R_1)X_1$ direkt an ein Ringkohlenstoffatom von D gebunden ist, und $X_2$ 2,3-Dibrompropionyl, 2,3-Dichlorpropionyl, α-Bromacryloyl, α-Chloracryloyl, 4-(β-Chloräthylsulfonyl)-butyryl, 4-Vinylsulfonylbutyryl, 2,4-Dichlorpyrimidin-5-carbonyl, 2,4-Dichlorpyrimidin-6-carbonyl oder 2,3-Dichlorchinoxalin-6-carbonyl ist.

Der Rest D in Formel (1) kann in der üblichen Weise substituiert sein. Als Beispiele für weitere Substituenten am Rest D seien genannt Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Äthylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Äthylcarbamoyl, Sulfamoyl, N-Alkylsulfamoyl mit 1 bis 4 Kohlenstoffatomen, wie N-Methylsulfamoyl, N-Äthylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Äthyl, Methoxy, Äthoxy, Acetylamino, Benzoylamino, Amino, Chlor, Brom, Ureido, Hydroxy, Carboxy, Sulfomethyl oder Sulfo.

Die Reste $R_1$ und $R_2$ sind, falls es sich um Alkylreste handelt, geradekettig oder verzweigt; sie können weitersubstituiert sein, z.B. durch Halogen, Hydroxy, Cyan, $C_{1-4}$-Alkoxy, Carboxy oder Sulfo. Als Beispiele für $R_1$ und $R_2$ seien die folgenden Reste genannt: Methyl, Äthyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Äthoxycarbonylmethyl, β-Methoxyäthyl, β-Äthoxyäthyl, β-Methoxypro-

pyl, β-Chloräthyl, γ-Brompropyl, β-Hydroxyäthyl, β-Hydroxybutyl, β-Cyanäthyl, Sulfomethyl, β-Sulfatoäthyl, Aminosulfonylmethyl und β-Sulfatoäthyl. Vorzugsweise sind $R_1$ und $R_2$ unabhängig voneinander Wasserstoff, Methyl oder Äthyl. Ist $X_1$ ein Aminofluor-s-triazinrest, so entspricht er der Formel

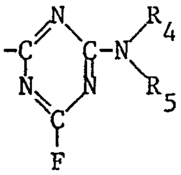

(B) ,

worin $R_4$ und $R_5$ unabhängig voneinander Wasserstoff, $C_{1-4}$-Alkyl, das gegebenenfalls durch Halogen, Cyan, $C_{1-4}$-Alkoxy, Hydroxy, Carboxy, Sulfo oder Sulfato substituiert ist, Benzyl, Phenäthyl, Cyclohexyl, Phenyl, das gegebenenfalls durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo substituiert ist, oder Naphthyl, das gegebenenfalls durch Halogen, Nitro, $C_{1-4}$-Alkoxy, $C_{1-4}$-Alkanoylamino, Hydroxy, Carboxy oder Sulfo substituiert ist, oder worin $R_4$ und $R_5$ zusammen mit dem Aminostickstoffatom einen Morpholino-, Pipderidino- oder Piperazinorest bilden, oder worin $-NR_4R_5$ Hydrozino oder Semicarbazido ist.

Die oben genannten Alkylreste können geradkettig oder verzweigt sein.

Als Beispiele für derartige Aminogruppen seien genannt: $-NH_2$, Methylamino, Äthylamino, Propylamino, Isopropylamino, Butylamino, Hexylamino, β-Methoxyäthylamino, γ-Methoxypropylamino, β-Äthoxyäthylamino, N,N-Di-methylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N,Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Äthyl-N-phenylamino, N-β-hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino, Piperazino, Hydrazino und Semicarbazido.

Bevorzugt sind Reaktivfarbstoffe der Formel (1), worin D der Rest eines Mono- oder Disazofarbstoffes oder eines Metallkomplexazofarbstoffes ist.

In diesem Falle sind die Reste $-N(R_1)-X_1$ und $-N(R_2)-X_2$ an verschiedene oder an gleiche Reste von Ausgangskomponenten, d.h. Diazo- und Kupplungskomponenten, gebunden. Vorzugsweise sind die Reste $-N(R_1)-X_1$ und $-N(R_2)-X_2$ an je eine Komponente, Diazokomponente oder Kupplungskomponente, gebunden. Die Reaktivfarbstoffe haben dann z.B. die Formel

$X_1-N-D'-N = N-K-N-X_2$
$\quad\;\; |\qquad\qquad\quad\;\; |$
$\quad\; R_1 \qquad\qquad\quad R_2$ (1a).

Wenn beide Reste $-N(R_1)-X_1$ und $-N(R_2)-X_2$ an den gleichen Rest einer Ausgangskomponente, D' oder K, gebunden sind, so ist dies insbesondere der Rest der Kupplungskomponente K. Die Reaktivfarbstoffe entsprechen dann der Formel

$D'-N = N-K-N-X_2$
$\qquad\qquad\;\; |\;\; |$
$\qquad\quad R_1-N\;\; R_2$
$\qquad\qquad\;\; |$
$\qquad\qquad\; X_1$ (1b).

Ferner sind in Betracht zu ziehen, Reaktivfarbstoffe der Formel (1a), worin der Rest D' oder K noch einen weiteren Reaktivrest einschliesst, sowie Reaktivfarbstoffe der Formel (1b), worin der Rest D' noch einen weiteren Reaktivrest einschliesst. Somit sind auch tri- und tetrareaktive Farbstoffe umfasst. Die zusätzlichen, in D' oder K eingeschlossenen Reaktivreste können, wie $X_1$ und $X_2$, über Aminogruppen, oder in anderer Weise, z.B. durch eine direkte Bindung und D' bzw. K gebunden sein. Die obigen Erläuterungen gelten sinngemäss auch für Disazofarbstoffe und Metallkomplexazofarbstoffe.

Bevorzugt sind Reaktivfarbstoffe der Formel

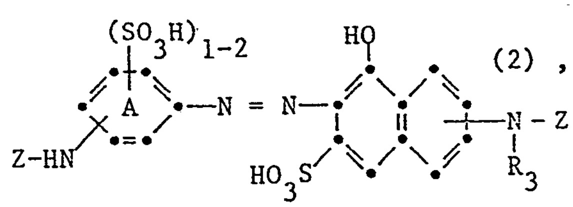

(2) ,

worin die beiden Reste Z alternativ $X_1$ oder $X_2$ sind, und $X_1$ und $X_2$ die unter Formel (1) angegebenen Bedeutungen haben, $R_3$ Wasserstoff, Methyl oder Äthyl ist, und der Benzolring A gegebenenfalls weitersubstituiert ist.

Bevorzugt sind ebenfalls Reaktivfarbstoffe der Formel

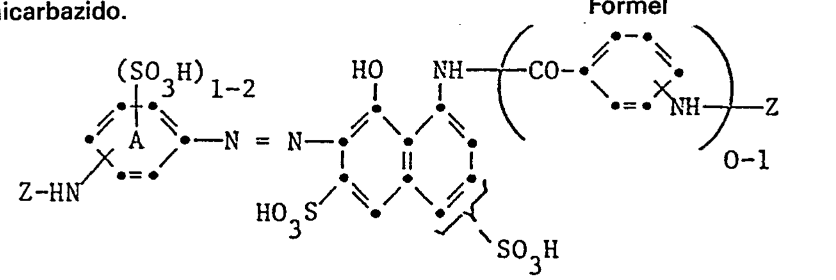

(3) ,

worin die beiden Reste Z alternativ $X_1$ oder $X_2$ sind, und $X_1$ und $X_2$ die unter Formel (1) angegebenen Bedeutungen haben, und der Benzolring A gegebenenfalls weitersubstituiert ist.

Bevorzugt sind insbesondere Reaktivfarbstoffe der Formel (2), worin der Benzolring A nicht weitersubstituiert ist, sowie Reaktivfarbstoffe der Formel (3), worin der Benzolring A nicht weitersubstituiert ist.

Bevorzugt sind ferner Reaktivfarbstoffe der Formel

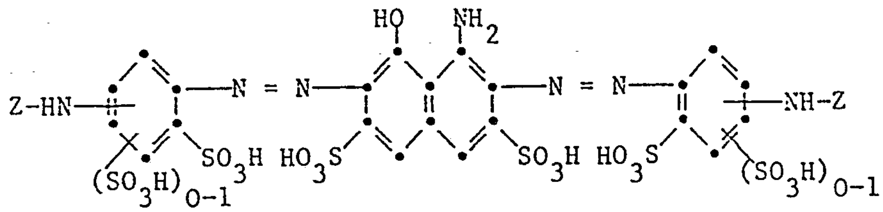

(4) ,

worin die beiden Reste Z alternativ $X_1$ oder $X_2$ sind, und $X_1$ und $X_2$ die unter Formel (1) angegebenen Bedeutungen haben.

Ausser den weiter oben beschriebenen Reaktivfarbstoffen der Formeln (2), (3) und (4) sind als weitere wertvolle Vertreter die Reaktivfarbstoffe der folgenden Formeln zu nennen:

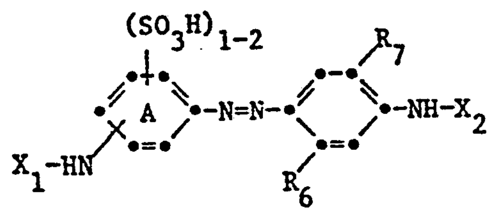

(5)

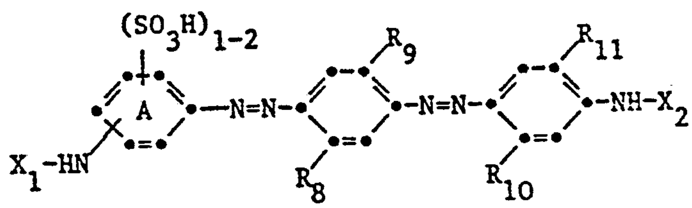

(6)

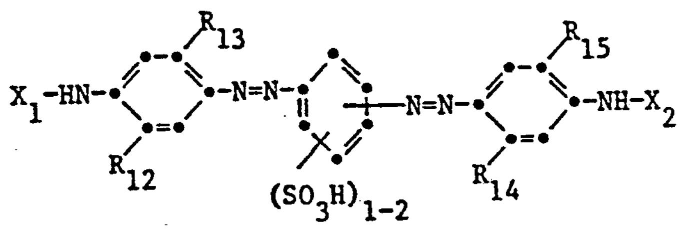

(7)

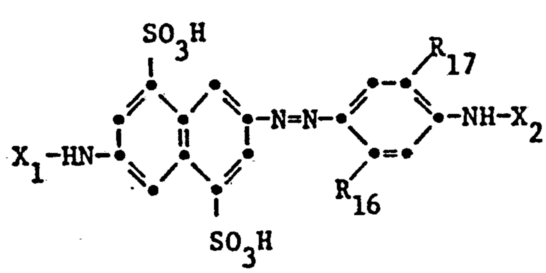

(8)

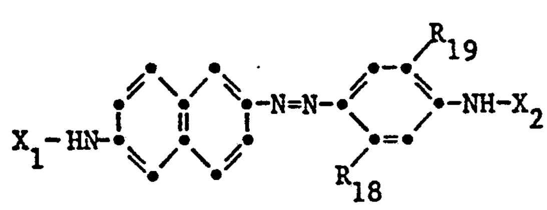

(9)

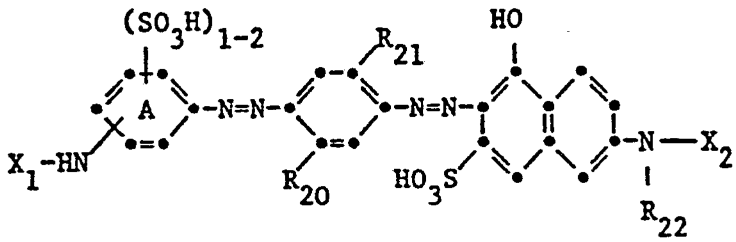

(10)

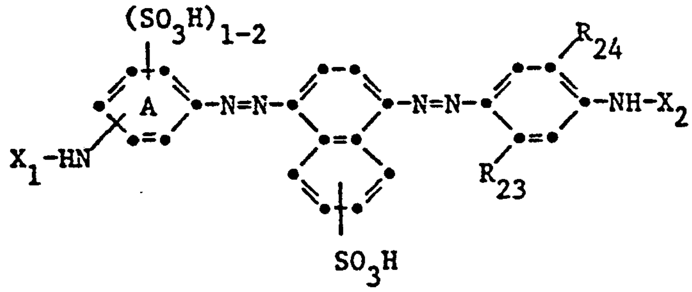

(11)

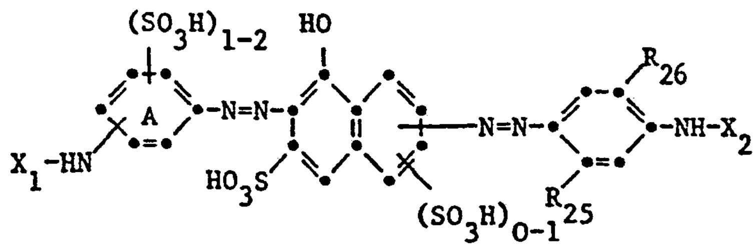

(12)

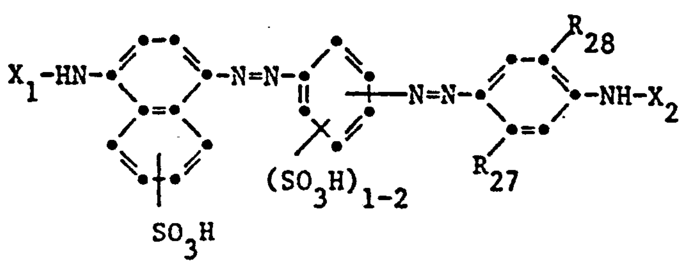

(13)

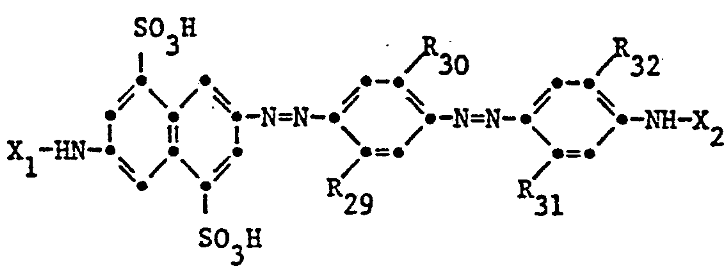

(14)

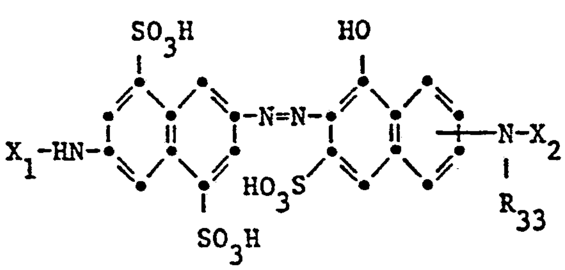

(15)

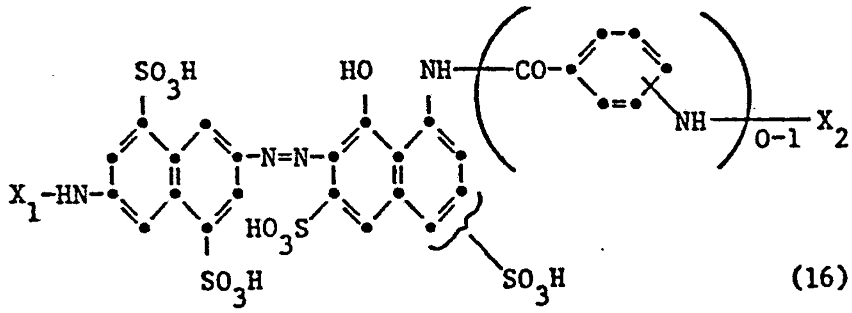

(16)

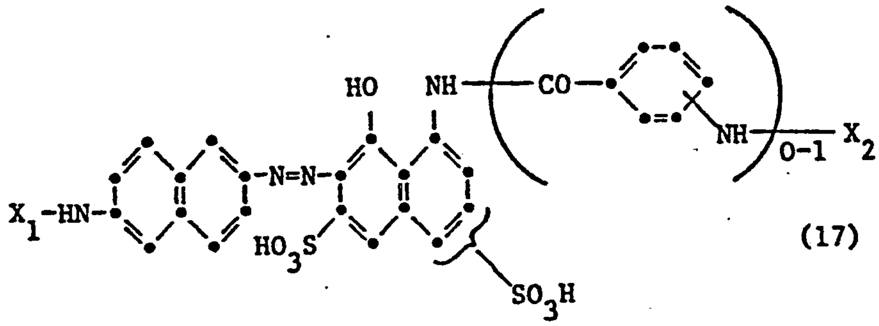

(17)

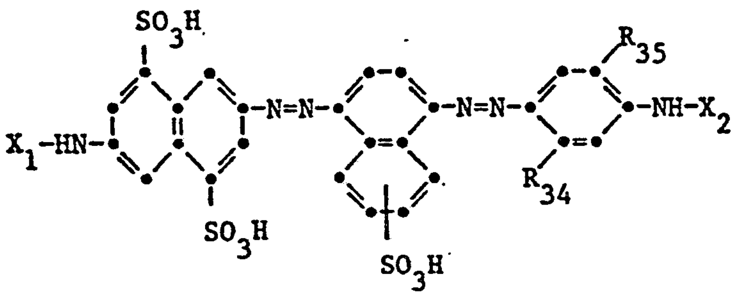

(18)

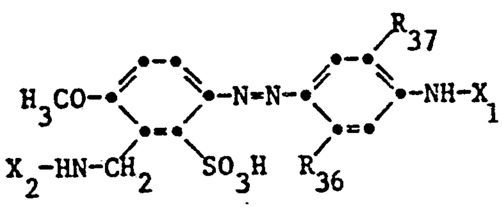

(19)

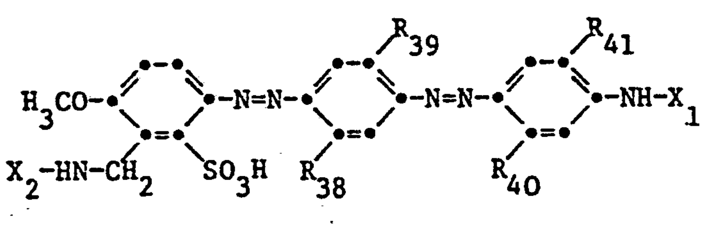

(20)

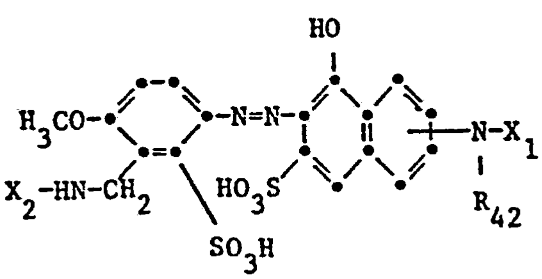

(21)

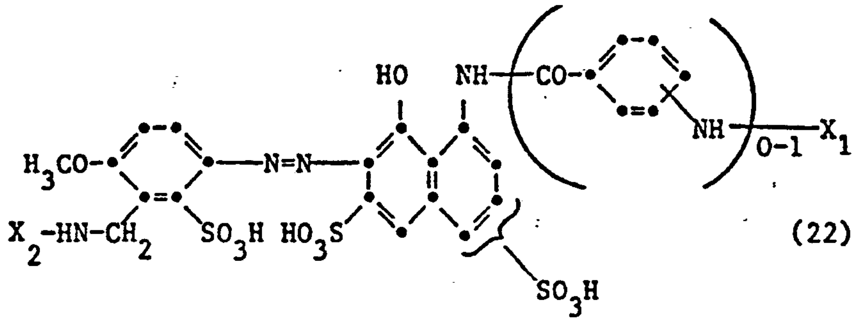

(22)

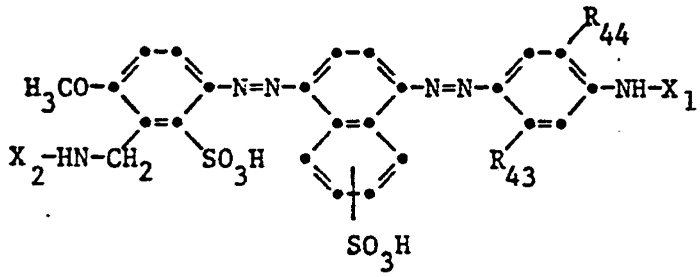

(23)

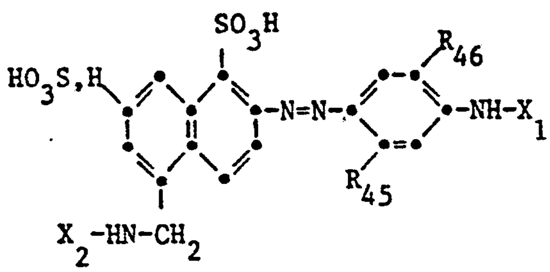

(24)

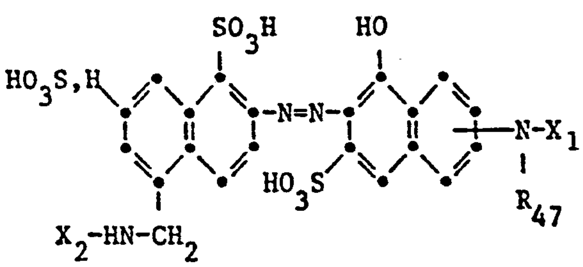

(25)

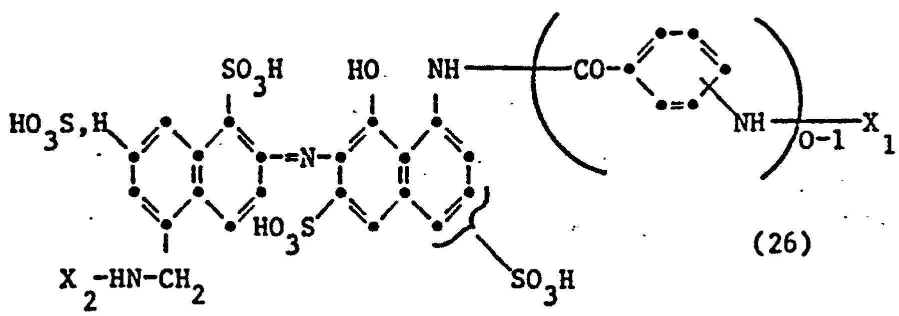

(26)

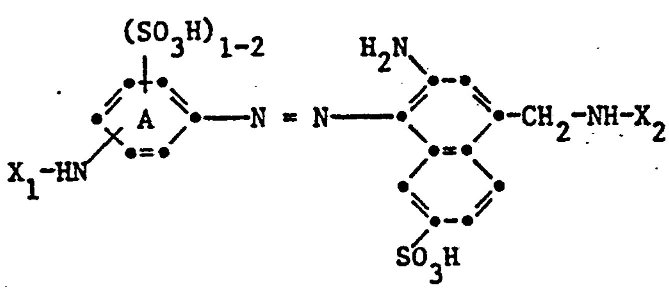

(27)

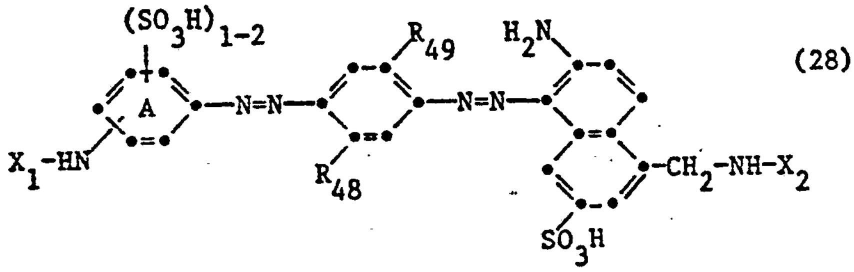

(28)

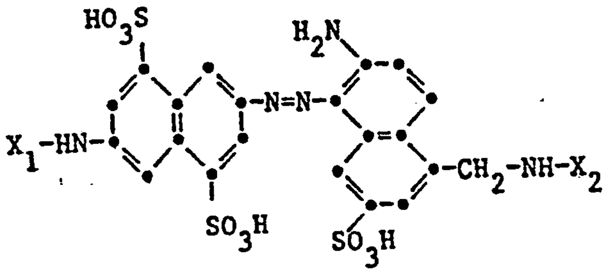

(29)

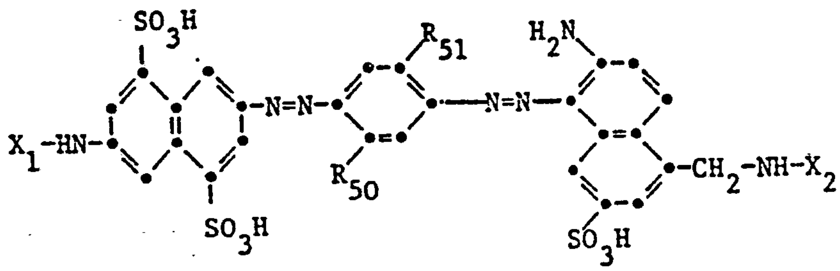

(30)

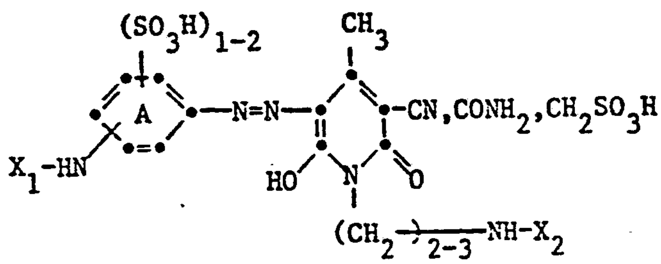

(31)

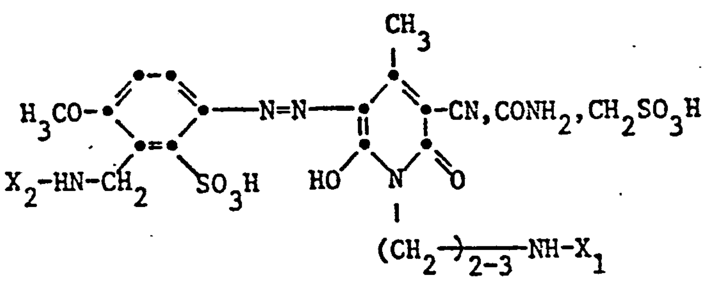

(32)

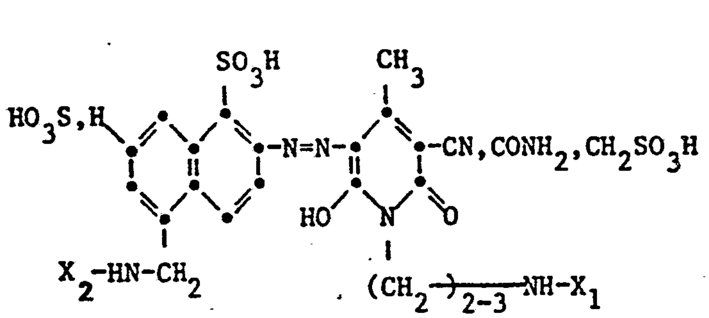

(33)

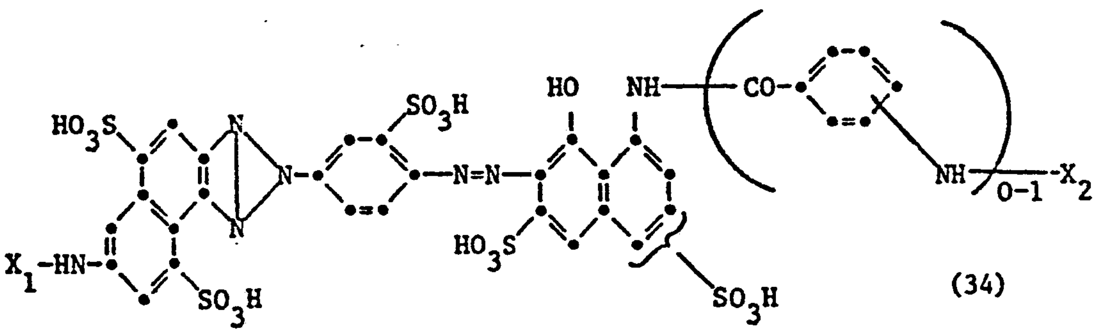

(34)

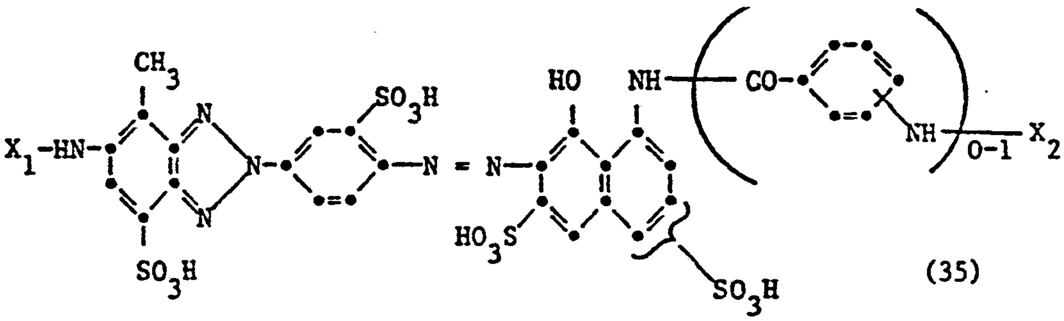

(35)

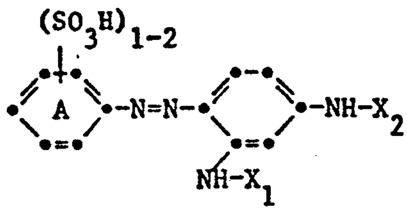

(36)

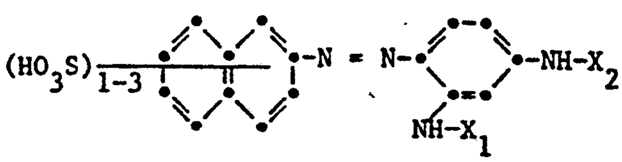

(37)

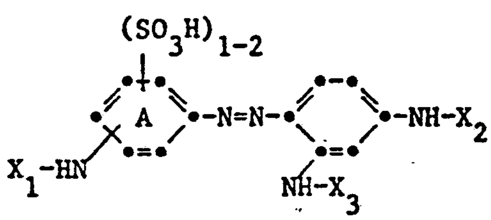

(38)

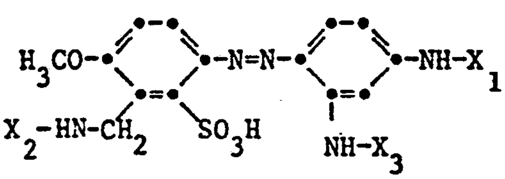

(39)

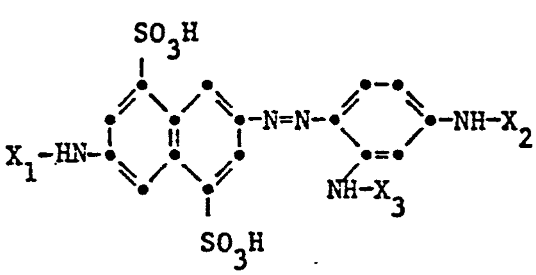

(40)

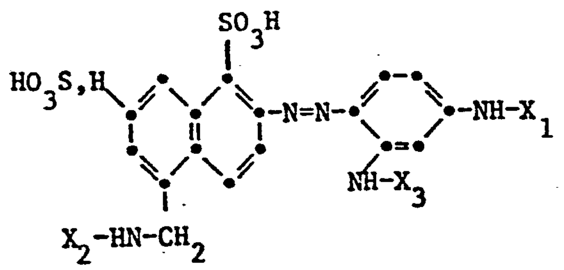

(41)

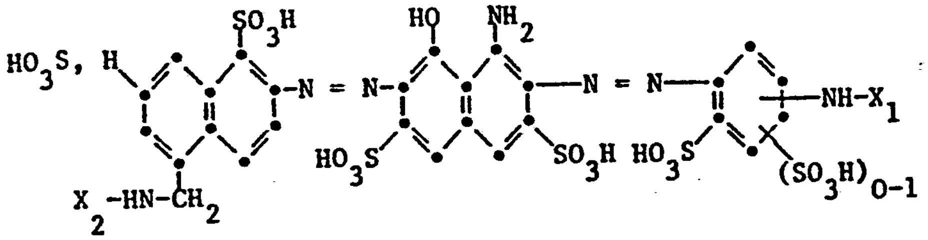

(42)

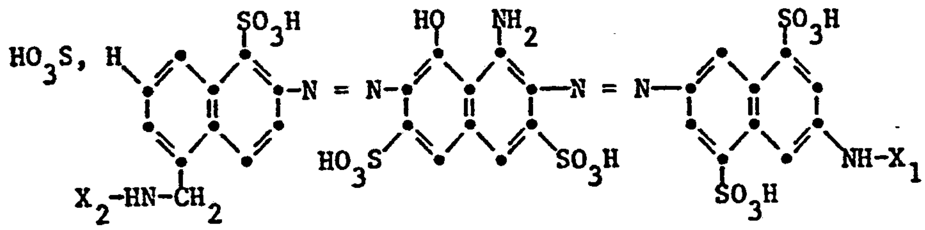

(43)

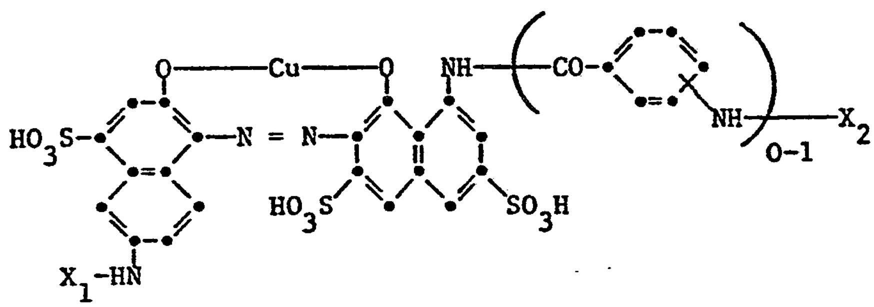

(44)

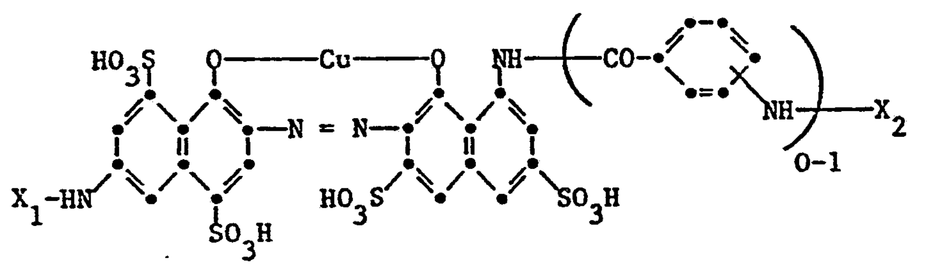

(45)

In den Formeln (5) bis (45) bedeuten die Reste $R_{22}$, $R_{33}$, $R_{42}$ und $R_{47}$ Wasserstoff oder $C_{1-4}$-Alkyl; die übrigen Reste $R_6$ bis $R_{21}$, $R_{23}$ bis $R_{32}$, $R_{34}$ bis $R_{41}$, $R_{43}$ bis $R_{46}$ und $R_{48}$ bis $R_{51}$ sind Wasserstoff, $C_1$–$C_4$-Alkyl, $C_1$–$C_4$-Alkoxy, $C_1$–$C_4$-Alkanoylamino, Ureido oder Halogen, wobei die Reste $R_6$, $R_7$, ... etc. die zu ein und derselben Formel gehören, voneinander unabhängig sind; $X_1$ und $X_2$ und gegebenenfalls $X_3$ haben die unter Formel (1) angegebenen Bedeutungen; und die Benzolringe A sind gegebenenfalls weitersubstituiert. Vorzugsweise bedeuten die Reste $R_{22}$, $R_{33}$, $R_{42}$ und $R_{47}$ Wasserstoff; Methyl oder Äthyl, und die übrigen oben genannten Reste $R_6$ bis $R_{21}$, ... usw., Wasserstoff, Methyl, Äthyl, Methoxy, Äthoxy, Acetylamino, Ureido oder Chlor. Vorzugsweise sind in den Reaktivfarbstoffen der Formeln (5), (6), (10) bis (12), (27), (28), (33), (38) und (40) die Benzolringe A nicht weitersubstituiert. In den Formeln (5) bis (18), (31), (34) bis (38), (40), (44) und (45) können die Reste $X_1$ und $X_2$ und gegebenenfalls $X_3$ auch vertauscht sein.

In den bevorzugten Reaktivfarbstoffen der Formeln (2) und (3) sind die Benzolringe A vorzugsweise ebenfalls nicht weitersubstituiert; als Diazokomponenten werden in diesem Falle vor allem die 1,3-Phenylen-4-sulfonsäure, 1,4-Phenylendiamin-2-sulfonsäure, 1,4-Phenylendiamin-2,5-disulfonsäure oder 1,3-Phenylendiamin-4,6-disol-

fonsäure verwendet. Der Rest $R_3$ in Formel (2) ist insbesondere Wasserstoff, Methyl oder Äthyl.

Bevorzugt sind vor allem Reaktivfarbstoffe der Formeln (1) bis (45), worin $X_1$ ein Rest der Formel (B) ist, worin die Aminogruppe $-NR_4R_5$; $-NH_2$, N-β-Hydroxyäthylamino, N,N-Di-β-Hydroxyäthylamino, β-Sulfoäthylamino, Hydrazino, Semicarbazido, Phenylamino, das gegebenenfalls im Phenylkern substituiert ist durch Chlor, Methyl, Äthyl, Methoxy, Äthoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Äthyl, N-Sulfo-$C_{1-4}$-alkyl-N-phenylamino, das gegebenenfalls im Phenylkern substituiert ist durch Chlor, Methyl oder Äthyl, N-Hydroxy-$C_{1-4}$-alkyl-N-phenylamino, der Sulfonaphthylamino ist, oder $X_2$ ein 2,4-Difluor-5-chlorpyrimidyl-(6)-Rest ist, und $X_2$ ein α,β-Dibrompropionyl-, α-Bromacryloyl-, 4-(β-Chloräthylsulfonyl)-butyryl- oder 4-Vinylsulfonyl-butyryl-Rest ist.

In Betracht zu ziehen sind ferner auch Reaktivfarbstoffe der Formel (1), worin einer der beiden Reste $-N(R_1)-X_1$ und $-N(R_2)-X_2$ oder beide, über einen Rest der Formel

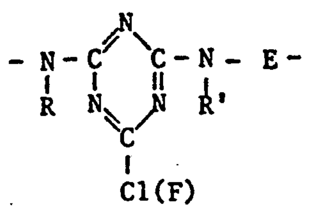

(48)

an den Chromophor gebunden sind. In diesem Falle ist der Rest $-N(R_1)-X_1$ bzw. $-N(R_2)-X_2$ an E gebunden; E ist ein gegebenenfalls substituiertes aliphatisches oder aromatisches Brückenglied. Das Brückenglied E ist vorzugsweise ein Alkylen- oder Arylenrest. So kann E ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Äthylen, Propylen, Butylen, Hexylen oder Cyclohexylen. Als Arylenrest ist E z.B. ein Naphthylenrest, der Rest eines Diphenyls oder Stilbens oder insbesondere ein Phenylenrest. Der Rest E kann weitere Substituenten enthalten, z.B. Halogenatome, wie Fluor, Chlor und Brom, Alkylengruppen mit 1 bis 4 Kohlenstoffatomen, wie Methyl, Äthyl und Propyl, Alkoxygruppen mit 1 bis 4 Kohlenstoffatomen, wie Methoxy, Äthoxy, Propyloxy und Isopropyloxy, Carboxy oder Sulfo.

R und R′ sind unabhängig voneinander Wasserstoff oder ein gegebenenfalls substituierter $C_{1-4}$-Alkylrest.

Das Verfahren zur Herstellung der Reaktivfarbstoffe der Formel (1) ist dadurch gekennzeichnet, dass man Farbstoffe der Formel

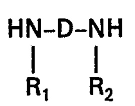

oder ihre Vorprodukte mit Reaktivkomponenten zur Einführung der Reste $X_1$ und $X_2$ zu Reaktivfarbstoffen dere Formel (1) umsetzt, oder die erhaltenen Zwischenprodukte in die gewünschten Endfarbstoffe überführt, und gegebenenfalls eine weitere Umwandlungsreaktion anschliesst.

Bei der Herstellung der bevorzugten Azofarbstoffe müssen die Diazokomponenten und die Kupplungskomponenten zusammen zwei Aminogruppen $-N(R_1)H$ und $-N(R_2)H$, und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit einem Fluortriazin etc. durch Verseifen bzw. Reduzieren in die $NH_2$ Gruppe übergeführt wird. Die Einführung der Reaktivreste $X_1$ und $X_2$ erfolgt z.B. durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Fluortriazin- oder Halogenpyrimidinrestes etc. eintritt, muss ein Zwischenprodukt, welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktion kommt z.B. die nachträgliche Umsetzung eines Difluortriazinylrestes mit einem Amin in Betracht. Welche Reaktion bei der Herstellung eines sekundären Kondensationsproduktes aus Amin $HNR_4R_5$, 2,4,6-Trifluor-s-triazin und Diaminobenzolsulfonsäure zweckmässigerweise zuerst ausgeführt wird, die des Trifluortriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen.

Eine weitere Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Y einen Rest $HO-CH_2CH_2-$ enthält, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Y die Vinylgruppe $H_2C=CH-$ enthält, und

lagert an das Zwischenprodukt Thioschwefelsäure an, wobei ein Rest $HO_3SS-CH_2CH_2-$ entsteht. Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen. Oder man kann, falls in einem Reaktivfarbstoff der Formel (1) der Rest $X_2$ ein α,β-Dibrompropionylaminorest ist, durch Behandlung mit halogenwasserstoffabspaltenden Mitteln, die α,β-Dibrompropionylgruppe in die α-Bromacryloylgruppe umwandeln, gegebenenfalls gleichzeitig mit der oben erwähnten Abspaltung von Schwefelsäure aus einem Sulfatoäthylsulfonylrest.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Die wichtigsten Verfahrensvarianten sind in den Ausführungsbeispielen dargestellt.

Im folgenden sollen mögliche Ausgangsstoffe, die zur Herstellung der bevorzugten Reaktivfarbstoffe der Formel (1), worin D der Rest eines Mono- oder Polyazofarbstoffes ist, verwendet werden können, einzeln genannt werden.

Diazokomponenten

1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Falls die beiden Reste $-N(R_1)-X_1$ und $-N(R_2)-X_2$ in Formel (1) an die gleiche Komponente, z.B. die Kupplungskomponente, gebunden sind, wie dies weiter vorn beschrieben ist, können als Diazokomponenten auch solche verwendet werden, die neben der zu diazotierenden Aminogruppe keine acylierbare Aminogruppe enthalten, wie z.B. Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, 1-Aminobenzol-2-, -3-, oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Amino-naphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4'-disulfonsäure, 3-Methoxy-4-amino-6-methylazobenzol-2',4'-disulfonsäure oder 3-Methoxy-4-amino-6-methylazobenzol-2',5'-disulfonsäure.

Kupplungskomponenten

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Äthylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-amino-5-hydroxynaphthalin-1,7-disulfonsäure, 2-Amino-8-hydroxynaphthalin-6-sulfonsäure, 2-Methyl- bzw. 2-Äthylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6- bzw. -4,6-disulfonsäure, 1-(3′-Aminobenzoylamino)-8-hydroxynaphthalin-3,6- bzw. -4,6-disulfonsäure, 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylamino-benzol, 1-Amino-3-N,N-di-β-hydroxyäthylamino-4-methoxy-benzol, 1-Amino-3-N,N-di-β-sulfatoäthylamino-4-methoxy-benzol, 1-Amino-3-sulfobenzylamino-benzol, 1-Amino-3-sulfo-benzylamino-4-chlor-benzol, 1-Amino-3-N,N-di-sulfobenzylamino-benzol, 2-Amino-5-aminomethylnaphthalin-1-sulfonsäure, 2-Amino-5-aminomethylnaphthalin-1,7-disulfonsäure.

Reaktivkomponenten

Die Halogenide der weiter vorn genannten Reste $X_2$, z.B. α,β-Dibrompropionylchlorid, α,β-Dichlorpropionylchlorid, α-Bromacryloylchlorid, α-Chloracryloylchlorid, und gegebenenfalls auch gleichartig reagierende Halogensäureanhydride, wie α,β-Dichlorpropionsäure-anhydrid, 4-(β-Chloräthylsulfonyl)-butyrylchlorid, 4-vinylsulfonyl-butyrylchlorid, usw.; und für $X_1$ 2,4,6-Trifluor-s-triazin (Cyanurfluorid) bzw. die primären Kondensationsprodukte von 2,4,6-Trifluor-s-triazin mit den unten genannten Aminen, 2,4,6-Trifluor-5-chlorpyrimidin.

Amine

Ammoniak, Methylamin, Dimethylamin, Äthylamin, Diäthylamin, Propylamin, Isopropylamin, Butylamin, Dibutylamin, Isobutylamin, sek.-Butylamin, tert.-Butylamin, Hexylamin, Methoxyäthylamin, Äthoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Hydrazin, Semicarbazid, Benzylamin, Phenäthylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Äthylanilin, 3- und 4-Acetylaminoanilin, 2,5-Dimethoxyanilin, o-, m- und p-Anisidin, o-, m- und p-Phenetidin, 2-Methoxy-5-methylanilin, 2-Äthoxy-5-methoxyanilin, 4-Bromanilin, 3-Aminobenzamid, 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, 3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyridin, Morpholin, Pipieridin und Piperazin.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wässriger Alkalihydroxyde, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen

der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1

Zu 73,2 Teilen der in 600 Teilen Wasser gelösten Kupplungskomponente der Formel

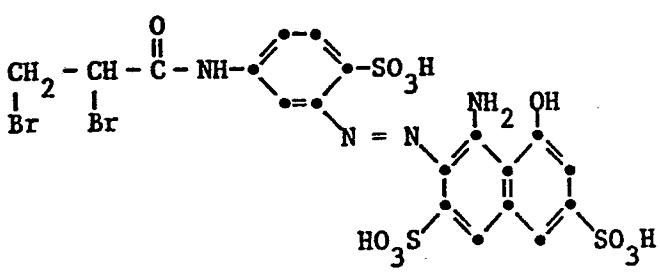

(hergestellt durch saure Kupplung von diazotierter 1-Amino-5-(2,3-dibrompropionylamino)-benzol-2-sulfonsäure auf 1-Amino-8-hydroxynaphthalin-3,6-disulfonsäure) wird bei 0 bis 5°C eine Mischung von 45,6 Teilen diazotiertem 2-(3′-Amino-4′-sulfophenylamino)-4-fluor-6-(2″-sulfophenylamino)-1,3,5-triazin mit 300 Teilen Wasser gegeben. Nach vollständiger Kupplungsreaktion bei pH 6,5 bis 7,5 wird der gebildete Reaktivfarbstoff der Formel

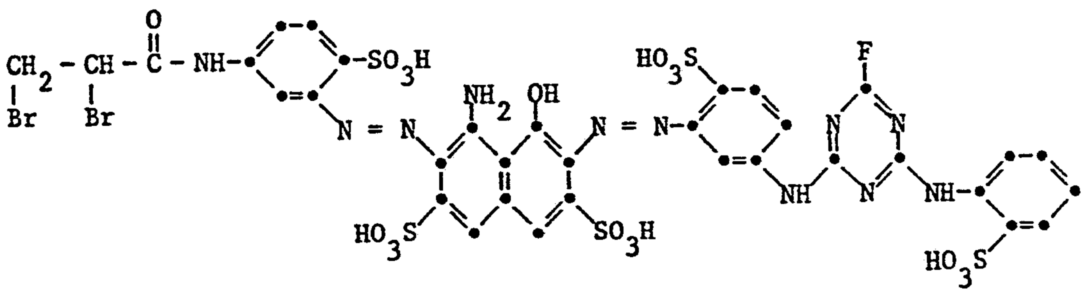

durch Eindampfen oder Gefriertrocknen der Reaktionslösung bei pH 7 isoliert. Er färbt Baumwolle in blauen Tönen.

Weitere wertvolle Reaktivfarbstoffe, die Baumwolle in den in Tabelle 1, Spalte 4, angegebenen Farbtönen färben, werden erhalten, wenn man gemäss den Angaben in Beispiel 1 die in Spalte 2 angegebene diazotierte Diazokomponente sauer auf 1-Amino-8-hydroxynaphthalin-3,6-disulfonsäure kuppelt, und auf die so erhaltene Monoazoverbindung, die in Spalte 3 angegebene diazotierte Diazokomponente kuppelt.

Tabelle 1

| Nr. | Diazokomponente | Diazokomponente | Farbton auf Baumwolle |
|---|---|---|---|
| 1 | 2-(3'-Amino-4'-sulfophenylamino)-4-fluor-6-(2''-sulfophenylamino)-1,3,5-triazin | 1-Amino-5-(2,3-dibrompropionylamino)-benzol-2-sulfonsäure | blau |
| 2 | 2-(3'-Amino-4'-sulfophenylamino)-4-fluor-6-(2''-sulfophenylamino)-1,3,5-triazin | 1-Amino-5-(2,3-dichlorpropionylamino)-benzol-2-sulfonsäure | blau |
| 3 | 2-(3'-Amino-4'-sulfophenylamino)-4-fluor-6-(2''-sulfophenylamino)-1,3,5-triazin | 1-Amino-5-(4-(β-chloräthylsulfonyl)-butyrylamino)-benzol-2-sulfonsäure | blau |
| 4 | 2-(3'-Amino-4'-sulfophenylamino)-4-fluor-6-(2''-sulfophenylamino)-1,3,5-triazin | 1-Amino-5-(2',4'-dichlorpyrimidin-5'-carbonylamino)-benzol-2-sulfonsäure | blau |
| 5 | 2-(3'-Amino-4'-sulfophenylamino)-4-fluor-6-(2''-sulfophenylamino)-1,3,5-triazin | 1-Amino-5-(2',4'-dichlorpyrimidin-6'-carbonylamino)-benzol-2-sulfonsäure | blau |
| 6 | 2-(3'-Amino-4'-sulfophenylamino)-4-fluor-6-(2''-sulfophenylamino)-1,3,5-triazin | 1-Amino-5-(2',3'-dichlorchinoxalin-6'-carbonylamino)-benzol-2-sulfonsäure | blau |
| 7 | 2-(3'-Amino-4'-sulfophenylamino)-4-fluor-6-(2''-sulfophenylamino)-1,3,5-triazin | 1-Amino-5-(α-bromacryloylamino)-benzol-2-sulfonsäure | blau |
| 8 | 2-(3'-Amino-4'-sulfophenylamino)-4-fluor-6-(2''-sulfophenylamino)-1,3,5-triazin | 1-Amino-4-(2,3-dibrompropionylamino)-benzol-2,5-disulfonsäure | blau |
| 9 | 2-(3'-Amino-4'-sulfophenylamino)-4-fluor-6-(2''-sulfophenylamino)-1,3,5-triazin | 1-Amino-4-(α-bromacryloylamino)-benzol-2,5-disulfonsäure | blau |
| 10 | 2-(3'-Amino-4'-sulfophenylamino)-4-fluor-6-(2''-sulfophenylamino)-1,3,5-triazin | 1-Amino-4-(4-(β-chloräthylsulfonyl)-butyrylamino)-benzol-2,5-disulfonsäure | blau |
| 11 | 2-(3'-Amino-4'-sulfophenylamino)-4-fluor-6-(2''-sulfophenylamino)-1,3,5-triazin | 1-Amino-4-(4-vinylsulfonylbutyrylamino)-benzol-2,5-disulfonsäure | blau |
| 12 | 2-(3'-Amino-4'-sulfophenylamino)-4-fluor-6-(1'',5''-disulfonaphth-2''-yl-amino)-1,3,5-triazin | 1-Amino-5-(2,3-dibrompropionylamino)-benzol-2-sulfonsäure | blau |
| 13 | 2-(3'-Amino-4'-sulfophenylamino)-4-fluor-6-(1'',5''-disulfonaphth-2''-yl-amino)-1,3,5-triazin | 1-Amino-5-(2,3-dichlorpropionylamino)-benzol-2-sulfonsäure | blau |
| 14 | 2-(3'-Amino-4'-sulfophenylamino)-4-fluor-6-(1'',5''-disulfonaphth-2''-yl-amino)-1,3,5-triazin | 1-Amino-5-(4-(β-chloräthylsulfonyl)-butyrylamino)-benzol-2-sulfonsäure | blau |
| 15 | 2-(3'-Amino-4'-sulfophenylamino)-4-fluor-6-(1'',5''-disulfonaphth-2''-yl-amino)-1,3,5-triazin | 1-Amino-4-(α-bromacryloylamino)-benzol-2,5-disulfonsäure | blau |

Tabelle 1 (Fortsetzung)

| Nr. | Diazokomponente | Diazokomponente | Farbton auf Baumwolle |
|---|---|---|---|
| 16 | 2-(3'-Amino-4'-sulfophenylamino)-4-fluor-6-(1",5"-disulfonaphth-2"-yl-amino)-1,3,5-triazin | 1-Amino-4-(4-(β-chloräthylsulfonyl)-butyrylamino)-benzol-2,5-disulfonsäure | blau |
| 17 | 2-(3'-Amino-4'-sulfophenylamino)-4-fluor-6-(1",5"-disulfonaphth-2"-yl-amino)-1,3,5-triazin | 1-Amino-4-(4-vinylsulfonylbutyrylamino)-benzol-2,5-disulfonsäure | blau |
| 18 | 2-(3'-Amino-4'-sulfophenylamino)-4-fluor-6-(1",5"-disulfonaphth-2"-yl-amino)-1,3,5-triazin | 1-Amino-4-(2,3-dibrompropionylamino)-benzol-2,5-disulfonsäure | blau |
| 19 | 2-(4'-Amino-2',5'-disulfophenylamino)-4-fluor-6-(1"-sulfonaphth-2"-yl-amino)-1,3,5-triazin | 1-Amino-5-(2,3-dibrompropionylamino)-benzol-2-sulfonsäure | grünstichig blau |
| 20 | 2-(4'-Amino-2',5'-disulfophenylamino)-4-fluor-6-(1"-sulfonaphth-2"-yl-amino)-1,3,5-triazin | 1-Amino-5-(2,3-dichlorpropionylamino)-benzol-2-sulfonsäure | grünstichig blau |
| 21 | 2-(4'-Amino-2',5'-disulfophenylamino)-4-fluor-6-(1"-sulfonaphth-2"-yl-amino)-1,3,5-triazin | 1-Amino-5-(4-(β-chloräthylsulfonyl)-butyrylamino)-benzol-2-sulfonsäure | grünstichig blau |
| 22 | 2-(4'-Amino-2',5'-disulfophenylamino)-4-fluor-6-(1"-sulfonaphth-2"-yl-amino)-1,3,5-triazin | 1-Amino-4-(α-bromacryloylamino)-benzol-2,5-disulfonsäure | grünstichig blau |
| 23 | 2-(4'-Amino-2',5'-disulfophenylamino)-4-fluor-6-(1"-sulfonaphth-2"-yl-amino)-1,3,5-triazin | 1-Amino-4-(4-(β-chloräthylsulfonyl)-butyrylamino)-benzol-2,5-disulfonsäure | grünstichig blau |
| 24 | 2-(4'-Amino-2',5'-disulfophenylamino)-4-fluor-6-(1"-sulfonaphth-2"-yl-amino)-1,3,5-triazin | 1-Amino-4-(4-vinylsulfonylbutyrylamino)-benzol-2,5-disulfonsäure | grünstichig blau |
| 25 | 2-(4'-Amino-2',5'-disulfophenylamino)-4-fluor-6-(1"-sulfonaphth-2"-yl-amino)-1,3,5-triazin | 1-Amino-4-(2,3-dibrompropionylamino)-benzol-2,5-disulfonsäure | grünstichig blau |
| 26 | 2-(3'-Amino-4'-sulfophenylamino)-4-fluor-6-(2",5"-disulfophenylamino)-1,3,5-triazin | 1-Amino-5-(2,3-dibrompropionylamino)-benzol-2-sulfonsäure | blau |
| 27 | 2-(3'-Amino-4'-sulfophenylamino)-4-fluor-6-(2",5"-disulfophenylamino)-1,3,5-triazin | 1-Amino-5-(2,3-dichlorpropionylamino)-benzol-2-sulfonsäure | blau |
| 28 | 2-(3'-Amino-4'-sulfophenylamino)-4-fluor-6-(2",5"-disulfophenylamino)-1,3,5-triazin | 1-Amino-5-(4-(β-chloräthylsulfonyl)-butyrylamino)-benzol-2-sulfonsäure | blau |
| 29 | 2-(3'-Amino-4'-sulfophenylamino)-4-fluor-6-(2",5"-disulfophenylamino)-1,3,5-triazin | 1-Amino-4-(α-bromacryloylamino)-benzol-2,5-disulfonsäure | blau |
| 30 | 2-(3'-Amino-4'-sulfophenylamino)-4-fluor-6-(2",5"-disulfophenylamino)-1,3,5-triazin | 1-Amino-4-(4-(β-chloräthylsulfonyl)-butyrylamino)-benzol-2,5-disulfonsäure | blau |
| 31 | 2-(3'-Amino-4'sulfophenylamino)-4-fluor-6-(2",5"-disulfophenylamino)-1,3,5-triazin | 1-Amino-4-(4-vinylsulfonylbutyrylamino)-benzol-2,5-disulfonsäure | blau |
| 32 | 2-(3'-Amino-4'sulfophenylamino)-4-fluor-6-(2",5"-disulfophenylamino)-1,3,5-triazin | 1-Amino-4-(2,3-dibrompropionylamino)-benzol-2,5-disulfonsäure | blau |

Tabelle 1 (Fortsetzung)

| Nr. | Diazokomponente | Diazokomponente | Farbton auf Baumwolle |
|---|---|---|---|
| 33 | 2-(4'-Amino-2',5'-disulfophenylamino)-4-fluor-6-(2''-chlor-5''-sulfophenylamino)-1,3,5-triazin | 1-Amino-5-(2,3-dibrompropionylamino)-benzol-2-sulfonsäure | grünstichig blau |
| 34 | 2-(4'-Amino-2',5'-disulfophenylamino)-4-fluor-6-(2''-chlor-5''-sulfophenylamino)-1,3,5-triazin | 1-Amino-5-(2,3-dichlorpropionylamino)-benzol-2-sulfonsäure | grünstichig blau |
| 35 | 2-(4'-Amino-2',5'-disulfophenylamino)-4-fluor-6-(2''-chlor-5''-sulfophenylamino)-1,3,5-triazin | 1-Amino-5-(4-(β-chloräthylsulfonyl)-butyrylamino)-benzol-2-sulfonsäure | grünstichig blau |
| 36 | 2-(4'-Amino-2',5'-disulfophenylamino)-4-fluor-6-(2''-chlor-5''-sulfophenylamino)-1,3,5-triazin | 1-Amino-4-(α-bromacryloylamino)-benzol-2,5-disulfonsäure | grünstichig blau |
| 37 | 2-(4'-Amino-2',5'-disulfophenylamino)-4-fluor-6-(2''-chlor-5''-sulfophenylamino)-1,3,5-triazin | 1-Amino-4-(4-(β-chloräthylsulfonyl)-butyrylamino)-benzol-2,5-disulfonsäure | grünstichig blau |
| 38 | 2-(4'-Amino-2',5'-disulfophenylamino)-4-fluor-6-(2''-chlor-5''-sulfophenylamino)-1,3,5-triazin | 1-Amino-4-(4-vinylsulfonylbutyrylamino)-benzol-2,5-disulfonsäure | grünstichig blau |
| 39 | 2-(4'-Amino-2',5'-disulfophenylamino)-4-fluor-6-(2''-chlor-5''-sulfophenylamino)-1,3,5-triazin | 1-Amino-4-(2,3-dibrompropionylamino)-benzol-2,5-disulfonsäure | grünstichig blau |
| 40 | 2-(3'-Amino-4'-sulfophenylamino)-4-fluor-6-(N-äthyl-N-phenylamino)-1,3,5-triazin | 1-Amino-5-(2,3-dibrompropionylamino)-benzol-2-sulfonsäure | blau |
| 41 | 2-(3'-Amino-4'-sulfophenylamino)-4-fluor-6-(N-äthyl-N-phenylamino)-1,3,5-triazin | 1-Amino-5-(2,3-dichlorpropionylamino)-benzol-2-sulfonsäure | blau |
| 42 | 2-(3'-Amino-4'-sulfophenylamino)-4-fluor-6-(N-äthyl-N-phenylamino)-1,3,5-triazin | 1-Amino-5-(4-(β-chloräthylsulfonyl)-butyrylamino)-benzol-2-sulfonsäure | blau |
| 43 | 2-(3'-Amino-4'-sulfophenylamino)-4-fluor-6-(N-äthyl-N-phenylamino)-1,3,5-triazin | 1-Amino-4-(α-bromacryloylamino)-benzol-2,5-disulfonsäure | blau |
| 44 | 2-(3'-Amino-4'-sulfophenylamino)-4-fluor-6-(N-äthyl-N-phenylamino)-1,3,5-triazin | 1-Amino-4-(4-(β-chloräthylsulfonyl)-butyrylamino)-benzol-2,5-disulfonsäure | blau |
| 45 | 2-(3'-Amino-4'-sulfophenylamino)-4-fluor-6-(N-äthyl-N-phenylamino)-1,3,5-triazin | 1-Amino-4-(4-vinylsulfonylbutyrylamino)-benzol-2,5-disulfonsäure | blau |
| 46 | 2-(3'-Amino-4'-sulfophenylamino)-4-fluor-6-(N-äthyl-N-phenylamino)-1,3,5-triazin | 1-Amino-4-(2,3-dibrompropionylamino)-benzol-2,5-disulfonsäure | blau |
| 47 | 1-Amino-5-(2,3-dibrompropionylamino)-benzol-2-sulfonsäure | 2-(3'-Amino-4'-sulfophenylamino)-4-fluor-6-(1'',5''-disulfonaphth-2''-yl-amino)-1,3,5-triazin | blau |
| 48 | 1-Amino-5-(2,3-dichlorpropionylamino)-benzol-2-sulfonsäure | 2-(3'-Amino-4'-sulfophenylamino)-4-fluor-6-(1'',5''-disulfonaphth-2''-yl-amino)-1,3,5 | blau |
| 49 | 1-Amino-5-(4-(β-chloräthylsulfonyl)-butyrylamino)-benzol-2-sulfonsäure | 2-(3'-Amino-4'-sulfophenylamino)-4-fluor-6-(1'',5''-disulfonaphth-2''-yl-amino)-1,3,5 | blau |

Tabelle 1 (Fortsetzung)

| Nr. | Diazokomponente | Diazokomponente | Farbton auf Baumwolle |
|---|---|---|---|
| 50 | 1-Amino-5-(2',4'-dichlorpyrimidin-5'-carbonylamino)-benzol-2-sulfonsäure | 2-(3'-Amino-4'-sulfophenylamino)-4-fluor-6-(1",5"-disulfonaphth-2"-yl-amino)-1,3,5 | blau |
| 51 | 1-Amino-5-(2',4'-dichlorpyrimidin-6'-carbonylamino)-benzol-2-sulfonsäure | 2-(3'-Amino-4'-sulfophenylamino)-4-fluor-6-(1",5"-disulfonaphth-2"-yl-amino)-1,3,5 | blau |
| 52 | 1-Amino-5-(2',3'-dichlorchinoxalin-6'-carbonylamino)-benzol-2-sulfonsäure | 2-(3'-Amino-4'-sulfophenylamino)-4-fluor-6-(1",5"-disulfonaphth-2"-yl-amino)-1,3,5 | blau |
| 53 | 1-Amino-5-(α-bromacryloylamino)-benzol-2-sulfonsäure | 2-(3'-Amino-4'-sulfophenylamino)-4-fluor-6-(1",5"-disulfonaphth-2"-yl-amino)-1,3,5 | blau |
| 54 | 1-Amino-4-(2,3-dibrompropionylamino)-benzol-2,5-disulfonsäure | 2-(3'-Amino-4'-sulfophenylamino)-4-fluor-6-(1",5"-disulfonaphth-2"-yl-amino)-1,3,5 | grünstichig blau |
| 55 | 1-Amino-4-(α-bromacryloylamino)-benzol-2,5-disulfonsäure | 2-(3'-Amino-4'-sulfophenylamino)-4-fluor-6-(1",5"-disulfonaphth-2"-yl-amino)-1,3,5 | grünstichig blau |
| 56 | 1-Amino-4-(4-(β-chloräthylsulfonyl)-butyrylamino)-benzol-2,5-disulfonsäure | 2-(3'-Amino-4'-sulfophenylamino)-4-fluor-6-(1",5"-disulfonaphth-2"-yl-amino)-1,3,5-triazin | grünstichig blau |
| 57 | 1-Amino-4-(4-vinylsulfonylbutyrylamino)-benzol-2,5-disulfonsäure | 2-(3'-Amino-4'-sulfophenylamino)-4-fluor-6-(1",5"-disulfonaphth-2"-yl-amino)-1,3,5-triazin | grünstichig blau |
| 58 | 1-Amino-5-(2,3-dichlorpropionylamino)-benzol-2-sulfonsäure | 2-(3'-Amino-4'-sulfophenylamino)-4-fluor-6-(2"-sulfophenylamino)-1,3,5-triazin | blau |
| 59 | 1-Amino-5-(4-(β-chloräthylsulfonyl)-butyrylamino)-benzol-2-sulfonsäure | 2-(3'-Amino-4'-sulfophenylamino)-4-fluor-6-(2"-sulfophenylamino)-1,3,5-triazin | blau |
| 60 | 1-Amino-5-(2',4'-dichlorpyrimidin-5'-carbonylamino)-benzol-2-sulfonsäure | 2-(3'-Amino-4'-sulfophenylamino)-4-fluor-6-(2"-sulfophenylamino)-1,3,5-triazin | blau |
| 61 | 1-Amino-5-(2',4'-dichlorpyrimidin-6'-carbonylamino)-benzol-2-sulfonsäure | 2-(3'-Amino-4'-sulfophenylamino)-4-fluor-6-(2"-sulfophenylamino)-1,3,5-triazin | blau |
| 62 | 1-Amino-5-(2',3'-dichlorchinoxalin-6'-carbonylamino)-benzol-2-sulfonsäure | 2-(3'-Amino-4'-sulfophenylamino)-4-fluor-6-(2"-sulfophenylamino)-1,3,5-triazin | blau |
| 63 | 1-Amino-5-(α-bromacryloylamino)-benzol-2-sulfonsäure | 2-(3'-Amino-4'-sulfophenylamino)-4-fluor-6-(2"-sulfophenylamino)-1,3,5-triazin | blau |
| 64 | 1-Amino-4-(2,3-dibrompropionylamino)-benzol-2,5-disulfonsäure | 2-(3'-Amino-4'-sulfophenylamino)-4-fluor-6-(2"-sulfophenylamino)-1,3,5-triazin | grünstichig blau |
| 65 | 1-Amino-4-(α-bromacryloylamino)-benzol-2,5-disulfonsäure | 2-(3'-Amino-4'-sulfophenylamino)-4-fluor-6-(2"-sulfophenylamino)-1,3,5-triazin | grünstichig blau |
| 66 | 1-Amino-4-(4-(β-chloräthylsulfonyl)-butyrylamino)-benzol-2,5-disulfonsäure | 2-(3'-Amino-4'-sulfophenylamino)-4-fluor-6-(2"-sulfophenylamino)-1,3,5-triazin | grünstichig blau |
| 67 | 1-Amino-4-(4-vinylsulfonylbutyrylamino)-benzol-2,5-disulfonsäure | 2-(3'-Amino-4'-sulfophenylamino)-4-fluor-6-(2"-sulfophenylamino)-1,3,5-triazin | grünstichig blau |
| 68 | 1-Amino-5-(2,3-dibrompropionylamino)-benzol-2-sulfonsäure | 2-(4'-Amino-2',5'-disulfophenylamino)-4-fluor-6-(1"-sulfonaphth-2"-yl-amino)-1,3,5-triazin | blau |
| 69 | 1-Amino-5-(2,3-dichlorpropionylamino)-benzol-2-sulfonsäure | 2-(4'-Amino-2',5'-disulfophenylamino)-4-fluor-6-(1"-sulfonaphth-2"-yl-amino)-1,3,5-triazin | blau |

Tabelle 1 (Fortsetzung)

| Nr. | Diazokomponente | Diazokomponente | Farbton auf Baumwolle |
|---|---|---|---|
| 70 | 1-Amino-5-(4-(β-chloräthylsulfonyl)-butyrylamino)-benzol-2-sulfonsäure | 2-(4'-Amino-2',5'-disulfophenylamino)-4-fluor-6-(1"-sulfonaphth-2"-yl-amino)-1,3,5-triazin | blau |
| 71 | 1-Amino-4-(α-bromacryloylamino)-benzol-2,5-disulfonsäure | 2-(4'-Amino-2',5'-disulfophenylamino)-4-fluor-6-(1"-sulfonaphth-2"-yl-amino)-1,3,5-triazin | grünstichig blau |
| 72 | 1-Amino-4-(4-(β-chloräthylsulfonyl)-butyrylamino)-benzol-2,5-disulfonsäure | 2-(4'-Amino-2',5'-disulfophenylamino)-4-fluor-6-(1"-sulfonaphth-2"-yl-amino)-1,3,5-triazin | grünstichig blau |
| 73 | 1-Amino-4-(4-vinylsulfonylbutyrylamino)-benzol-2,5-disulfonsäure | 2-(4'-Amino-2',5'-disulfophenylamino)-4-fluor-6-(1"-sulfonaphth-2"-yl-amino)-1,3,5-triazin | grünstichig blau |
| 74 | 1-Amino-4-(2,3-dibrompropionylamino)-benzol-2,5-disulfonsäure | 2-(4'-Amino-2',5'-disulfophenylamino)-4-fluor-6-(1"-sulfonaphth-2"-yl-amino)-1,3,5-triazin | grünstichig blau |
| 75 | 1-Amino-5-(2,3-dibrompropionylamino)-benzol-2-sulfonsäure | 2-(3'-Amino-4'-sulfophenylamino)-4-fluor-6-(2",5"disulfophenylamino)-1,3,5-triazin | blau |
| 76 | 1-Amino-5-(2,3-dichlorpropionylamino)-benzol-2-sulfonsäure | 2-(3'-Amino-4'-sulfophenylamino)-4-fluor-6-(2",5"-disulfophenylamino)-1,3,5-triazin | blau |
| 77 | 1-Amino-5-(4-(β-chloräthylsulfonyl)-butyrylamino)-benzol-2-sulfonsäure | 2-(3'-Amino-4'-sulfophenylamino)-4-fluor-6-(2",5"-disulfophenylamino)-1,3,5-triazin | blau |
| 78 | 1-Amino-4-(α-bromacryloylamino)-benzol-2,5-disulfonsäure | 2-(3'-Amino-4'-sulfophenylamino)-4-fluor-6-(2",5"-disulfophenylamino)-1,3,5-triazin | grünstichig blau |
| 79 | 1-Amino-4-(4-(β-chloräthylsulfonyl)-butyrylamino)-benzol-2,5-disulfonsäure | 2-(3'-Amino-4'-sulfophenylamino)-4-fluor-6-(2",5"-disulfophenylamino)-1,3,5-triazin | grünstichig blau |
| 80 | 1-Amino-4-(4-vinylsulfonylbutyrylamino)-benzol-2,5-disulfonsäure | 2-(3'-Amino-4'-sulfophenylamino)-4-fluor-6-(2",5"-disulfophenylamino)-1,3,5-triazin | grünstichig blau |
| 81 | 1-Amino-4-(2,3-dibrompropionylamino)-benzol-2,5-disulfonsäure | 2-(3'-Amino-4'-sulfophenylamino)-4-fluor-6-(2",5"-disulfophenylamino)-1,3,5-triazin | grünstichig blau |
| 82 | 4-(3'-Amino-4'-sulfophenylamino)-5-chlor-2,6-difluorpyrimidin | 1-Amino-5-(2,3-dibrompropionylamino)-benzol-2-sulfonsäure | blau |
| 83 | 4-(3'-Amino-4'-sulfophenylamino)-5-chlor-2,6-difluorpyrimidin | 1-Amino-5-(4-(β-chloräthylsulfonyl)-butyrylamino)-benzol-2-sulfonsäure | blau |
| 84 | 4-(3'-Amino-4'-sulfophenylamino)-5-chlor-2,6-difluorpyrimidin | 1-Amino-4-(α-bromacryloylamino)-benzol-2,5-disulfonsäure | blau |
| 85 | 4-(3'-Amino-4'-sulfophenylamino)-5-chlor-2,6-difluorpyrimidin | 1-Amino-4-(4-vinylsulfonylbutyrylamino)-benzol-2,5-disulfonsäure | blau |
| 86 | 4-(3'-Amino-4'-sulfophenylamino)-5-chlor-2,6-difluorpyrimidin | 1-Amino-4-(2,3-dibrompropionylamino)-benzol-2-sulfonsäure | blau |
| 87 | 4-(3'-Amino-4'-sulfophenylamino)-5-chlor-2,6-difluorpyrimidin | 1-Amino-3-(4-vinylsulfonylbutyrylamino)-benzol-4,6-disulfonsäure | blau |
| 88 | 4-(3'-Amino-4'-sulfophenylamino)-5-chlor-2,6-difluorpyrimidin | 1-Amino-3-(α-bromacryloylamino)-benzol-4,6-disulfonsäure | blau |

Tabelle 1 (Fortsetzung)

| Nr. | Diazokomponente | Diazokomponente | Farbton auf Baumwolle |
|---|---|---|---|
| 89 | 4-(3'-Amino-4',6'-disulfophenylamino)-5-chlor-2,6-difluorpyrimidin | 1-Amino-5-(2,3-dibrompropionylamino)-benzol-2-sulfonsäure | blau |
| 90 | 4-(3'-Amino-4',6'-disulfophenylamino)-5-chlor-2,6-difluorpyrimidin | 1-Amino-5-(4-(β-chloräthylsulfonyl)-butyrylamino)-benzol-2-sulfonsäure | blau |
| 91 | 4-(3'-Amino-4',6'-disulfophenylamino)-5-chlor-2,6-difluorpyrimidin | 1-Amino-4-(α-bromacryloylamino)-benzol-2,5-disulfonsäure | blau |
| 92 | 4-(3'-Amino-4',6'-disulfophenylamino)-5-chlor-2,6-difluorpyrimidin | 1-Amino-4-(4-vinylsulfonylbutyrylamino)-benzol-2,5-disulfonsäure | blau |
| 93 | 4-(3'-Amino-4',6'-disulfophenylamino)-5-chlor-2,6-difluorpyrimidin | 1-Amino-4-(2,3-dibrompropionylamino)-benzol-2-sulfonsäure | blau |
| 94 | 4-(3'-Amino-4',6'-disulfophenylamino)-5-chlor-2,6-difluorpyrimidin | 1-Amino-3-(4-vinylsulfonylbutyrylamino)-benzol-4,6-disulfonsäure | blau |
| 95 | 4-(3'-Amino-4',6'-disulfophenylamino)-5-chlor-2,6-difluorpyrimidin | 1-Amino-3-(α-bromacryloylamino)-benzol-4,6-disulfonsäure | blau |
| 96 | 1-Amino-5-(2,3-dibrompropionylamino)-benzol-2-sulfonsäure | 4-(3'-Amino-4'-sulfophenylamino)-5-chlor-2,6-difluorpyrimidin | blau |
| 97 | 1-Amino-5-(4-(β-chloräthylsulfonyl)-butyrylamino)-benzol-2-sulfonsäure | 4-(3'-Amino-4'-sulfophenylamino)-5-chlor-2,6-difluorpyrimidin | blau |
| 98 | 1-Amino-4-(α-bromacryloylamino)-benzol-2,5-disulfonsäure | 4-(3'-Amino-4'-sulfophenylamino)-5-chlor-2,5-difluorpyrimidin | grünstichig blau |
| 99 | 1-Amino-4-(4-vinylsulfonylbutyrylamino)-benzol-2,5-disulfonsäure | 4-(3'-Amino-4'-sulfophenylamino)-5-chlor-2,6-difluorpyrimidin | grünstichig blau |
| 100 | 1-Amino-3-(4-vinylsulfonylbutyrylamino)-benzol-4,6-disulfonsäure | 4-(3'-Amino-4'-sulfophenylamino)-5-chlor-2,6-difluorpyrimidin | blau |
| 101 | 1-Amino-3-(α-bromacryloylamino)-benzol-4,6-disulfonsäure | 4-(3'-Amino-4'-sulfophenylamino)-5-chlor-2,6-difluorpyrimidin | blau |
| 102 | 1-Amino-5-(2,3-dibrompropionylamino)-benzol-2-sulfonsäure | 4-(4'-Amino-2',5'-disulfophenylamino)-5-chlor-2,6-difluorpyrimidin | blau |
| 103 | 1-Amino-5-(4-(β-chloräthylsulfonyl)-butyrylamino)-benzol-2-sulfonsäure | 4-(4'-Amino-2',5'-disulfophenylamino)-5-chlor-2,6-difluorpyrimidin | blau |
| 104 | 1-Amino-4-(α-bromacryloylamino)-benzol-2,5-disulfonsäure | 4-(4'-Amino-2',5'-disulfophenylamino)-5-chlor-2,6-difluorpyrimidin | grünstichig blau |
| 105 | 1-Amino-4-(4-vinylsulfonylbutyrylamino)-benzol-2,5-disulfonsäure | 4-(4'-Amino-2',5'-disulfophenylamino)-5-chlor-2,6-difluorpyrimidin | grünstichig blau |
| 106 | 1-Amino-3-(4-vinylsulfonylbutyrylamino)-benzol-4,6-disulfonsäure | 4-(4'-Amino-2',5'-disulfophenylamino)-5-chlor-2,6-difluorpyrimidin | blau |
| 107 | 1-Amino-3-(α-bromacryloylamino)-benzol-4,6-disulfonsäure | 4-(4'-Amino-2',5'-disulfophenylamino)-5-chlor-2,6-difluorpyrimidin | blau |
| 108 | 1-Amino-5-(2,3-dibrompropionylamino)-benzol-2-sulfonsäure | 4-(4'-Amino-3'-sulfophenylamino)-5-chlor-2,6-difluorpyrimidin | blau |
| 109 | 1-Amino-5-(4-(β-chloräthylsulfonyl)-butyrylamino)-benzol-2-sulfonsäure | 4-(4'-Amino-3'-sulfophenylamino)-5-chlor-2,6-difluorpyrimidin | blau |
| 110 | 1-Amino-4-(α-bromacryloylamino)-benzol-2,5-disulfonsäure | 4-(4'-Amino-3'-sulfophenylamino)-5-chlor-2,6-difluorpyrimidin | grünstichig blau |
| 111 | 1-Amino-5-(4-vinylsulfonylbutyrylamino)-benzol-2,5-disulfonsäure | 4-(4'-Amino-3'-sulfophenylamino)-5-chlor-2,6-difluorpyrimidin | grünstichig blau |
| 112 | 1-Amino-3-(4-vinylsulfonylbutyrylamino)-benzol-4,6-disulfonsäure | 4-(4'-Amino-3'-sulfophenylamino)-5-chlor-2,6-difluorpyrimidin | blau |

Tabelle 1 (Fortsetzung)

| Nr. | Diazokomponente | Diazokomponente | Farbton auf Baumwolle |
|---|---|---|---|
| 113 | 1-Amino-3-(α-bromacryloylamino)-benzol-4,6-disulfonsäure | 4-(4'-Amino-3'-sulfophenylamino)-5-chlor-2,6-difluorpyrimidin | blau |
| 114 | 1-Amino-5-(2,3-dibrompropionylamino)-benzol-2-sulfonsäure | 4-(3'-Amino-4',6'-disulfophenylamino)-5-chlor-2,6-difluorpyrimidin | blau |
| 115 | 1-Amino-5-(4-(β-chloräthylsulfonyl)-butyrylamino)-benzol-2-sulfonsäure | 4-(3'-Amino-4',6'-disulfophenylamino)-5-chlor-2,6-difluorpyrimidin | blau |
| 116 | 1-Amino-4-(α-bromacryloylamino)-benzol-2,5-disulfonsäure | 4-(3'-Amino-4',6'-disulfophenylamino)-5-chlor-2,6-difluorpyrimidin | grünstichig blau |
| 117 | 1-Amino-4-(4-vinylsulfonylbutyrylamino)-benzol-2,5-disulfonsäure | 4-(3'-Amino-4',6'-disulfophenylamino)-5-chlor-2,6-difluorpyrimidin | grünstichig blau |
| 118 | 1-Amino-3-(4-vinylsulfonylbutyrylamino)-benzol-4,6-disulfonsäure | 4-(3'-Amino-4',6'-disulfophenylamino)-5-chlor-2,6-difluorpyrimidin | blau |
| 119 | 1-Amino-3-(α-bromacryloylamino)-benzol-4,6-disulfonsäure | 4-(3'-Amino-4',6'-disulfophenylamino)-5-chlor-2,6-difluorpyrimidin | blau |
| 120 | 1-Amino-5-(4-(β-chloräthylsulfonyl)-butyrylamino)-benzol-2-sulfonsäure | 2-(4'-Amino-2',5'-disulfophenylamino)-4-fluor-6-(β-hydroxyäthylamino)-1,3,5-triazin | blau |
| 121 | 1-Amino-5-(2,3-dibrompropionylamino)-benzol-2-sulfonsäure | 2-(4'-Amino-2',5'-disulfophenylamino)-4-fluor-6-(β-hydroxyäthylamino)-1,3,5-triazin | blau |
| 122 | 1-Amino-5-(2,3-dibrompropionylamino)-benzol-2-sulfonsäure | 2-(4'-Amino-2',5'-disulfophenylamino)-4-fluor-6-(β-sulfoäthylamino)-1,3,5-triazin | blau |
| 123 | 1-Amino-5-(4-(β-chloräthylsulfonyl)-butyrylamino)-benzol-2-sulfonsäure | 2-(4'-Amino-2',5'-disulfophenylamino)-4-fluor-6-(β-sulfoäthylamino)-1,3,5-triazin | blau |
| 124 | 1-Amino-5-(4-(β-chloräthylsulfonyl)-butyrylamino)-benzol-2-sulfonsäure | 2-(3'-Amino-4',6'-disulfophenylamino)-4-fluor-6-(β-hydroxyäthylamino)-1,3,5-triazin | blau |
| 125 | 1-Amino-5-(2,3-dibrompropionylamino)-benzol-2-sulfonsäure | 2-(3'-Amino-4',6'-disulfophenylamino)-4-fluor-6-(β-hydroxyäthylamino)-1,3,5-triazin | blau |
| 126 | 1-Amino-5-(2,3-dibrompropionylamino)-benzol-2-sulfonsäure | 2-(3'-Amino-4',6'-disulfophenylamino)-4-fluor-6-(β-sulfoäthylamino)-1,3,5-triazin | blau |
| 127 | 1-Amino-5-(4-(-β-chloräthylsulfonyl)-butyrylamino)-benzol-2-sulfonsäure | 2-(3'-Amino-4',6'-disulfophenylamino)-4-fluor-6-(β-sulfoäthylamino)-1,3,5-triazin | blau |
| 128 | 2-(3'-Amino-4',6'-disulfophenylamino)-4-fluor-6-(β-hydroxyäthylamino)-1,3,5-triazin | 1-Amino-5-(4-(β-chloräthylsulfonyl)-butyrylamino)-benzol-2-sulfonsäure | blau |
| 129 | 2-(3'-Amino-4',6'-disulfophenylamino)-4-fluor-6-(β-hydroxyäthylamino)-1,3,5-triazin | 1-Amino-5-(2,3-dibrompropionylamino)-benzol-2-sulfonsäure | blau |
| 130 | 2-(3'-Amino-4',6'-disulfophenylamino)-4-fluor-6-(β-sulfoäthylamino)-1,3,5-triazin | 1-Amino-5-(2,3-dibrompropionylamino)-benzol-2-sulfonsäure | blau |
| 131 | 2-(3'-Amino-4',6'-disulfophenylamino)-4-fluor-6-(β-sulfoäthylamino)-1,3,5-triazin | 1-Amino-5-(4-(β-chloräthylsulfonyl)-butyrylamino)-benzol-2-sulfonsäure | blau |

Beispiel 2

23,9 Teile 2-Amino-5-hydroxynaphthalin-7-sulfonsäure werden in 800 ml Wasser neutral gelöst. Bei 10°C werden 27,5 Teile 2,3-Dibrompropionylchlorid zugetropft, wobei der pH der Reaktionsmischung durch gleichzeitige Zugabe von 2n

Natriumhydroxydlösung bei 6,5 bis 7,0 gehalten wird. Nach vollständiger Reaktion wird bei 0 bis 5°C eine Mischung von 45,6 Teilen diazotiertem 2-(3′-Amino-4′-sulfophenylamino)-4-fluor-6-(2″-sulfophenylamino)-1,3,5-triazin mit 300 Teilen Wasser gegeben. Nach vollständiger Kupplungsreaktion bei pH 6,5 bis 7,5 wird der gebildete Reaktivfarbstoff der Formel

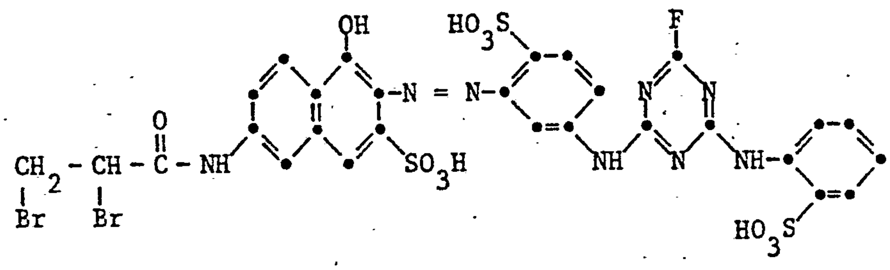

durch Eindampfen der Reaktionslösung bei pH 7 isoliert. Er färbt Baumwolle in orangen Tönen.

Weitere wertvolle Reaktivfarbstoffe, die Baumwolle in den in Tabelle 2, Spalte 5, angegebenen Farbtönen färben, werden erhalten, wenn man gemäss den Angaben in Beispiel 2 die in Spalte 2 angegebene Kupplungskomponente mit dem in Spalte 3 angegebenen Acylierungsmittel acyliert und auf das so erhaltene Zwischenprodukt die in Spalte 4 angegebene diazotierte Diazokomponente kuppelt.

Tabelle 2

| Nr. | Kupplungskomponente | Acylierungsmittel | Diazokomponente | Farbton auf Baumwolle |
|---|---|---|---|---|
| 1 | 2-Amino-5-hydroxynaphthalin-7-sulfonsäure | 2,3-Dibrompropionylchlorid | 4-(4′-Amino-3′-sulfophenylamino)-5-chlor-2,6-difluorpyrimidin | orange |
| 2 | 2-Amino-5-hydroxynaphthalin-7-sulfonsäure | 2,3-Dibrompropionylchlorid | 2-(4′-Amino-2′,5′-disulfophenylamino)-4-fluor-6-(β-hydroxyäthylamino)-1,3,5-triazin | orange |
| 3 | 2-Amino-5-hydroxynaphthalin-7-sulfonsäure | 2,3-Dibrompropionylchlorid | 2-(3′-Amino-4′-sulfophenylamino)-4-fluor-6-(2″,5″-disulfophenylamino)-1,3,5-triazin | orange |
| 4 | 2-Amino-5-hydroxynaphthalin-7-sulfonsäure | 2,3-Dibrompropionylchlorid | 2-(4′-Amino-2′,5′-disulfophenylamino)-4-fluor-6-(2″-chlor-5″-sulfophenylamino)-1,3,5-triazin | orange |
| 5 | 2-Amino-5-hydroxynaphthalin-7-sulfonsäure | 2,3-Dibrompropionylchlorid | 2-(3′-Amino-4′-sulfophenylamino)-4-fluor-6-(N-äthyl-N-phenylamino)-1,3,5-triazin | orange |
| 6 | 2-Amino-5-hydroxynaphthalin-7-sulfonsäure | 2,3-Dichlorpropionylchlorid | 4-(4′-Amino-3′-sulfophenylamino)-5-chlor-2,6-difluorpyrimidin | orange |
| 7 | 2-Amino-5-hydroxynaphthalin-7-sulfonsäure | 2,3-Dichlorpropionylchlorid | 2-(4′-Amino-2′,5′-disulfophenylamino)-4-fluor-6-(β-hydroxyäthylamino)-1,3,5-triazin | orange |
| 8 | 2-Amino-5-hydroxynaphthalin-7-sulfonsäure | 2,3-Dichlorpropionylchlorid | 2-(3′-Amino-4′-sulfophenylamino)-4-fluor-6-(2″,5″-disulfophenylamino)-1,3,5-triazin | orange |
| 9 | 2-Amino-5-hydroxynaphthalin-7-sulfonsäure | 2,3-Dichlorpropionylchlorid | 2-(4′-Amino-2′,5′-disulfophenylamino)-4-fluor-6-(2″-chlor-5″-sulfophenylamino)-1,3,5-triazin | orange |
| 10 | 2-Amino-5-hydroxynaphthalin-7-sulfonsäure | 2,3-Dichlorpropionylchlorid | 2-(3′-Amino-4′-sulfophenylamin)-4-fluor-6-(N-äthyl-N-phenylamino)-1,3,5-triazin | orange |
| 11 | 2-Amino-5-hydroxynaphthalin-7-sulfonsäure | 2,3-Dichlorpropionylchlorid | 2-(3′-Amino-4′-sulfophenylamino)-4-fluor-6-(2″-sulfophenylamino)-1,3,5-triazin | orange |

Tabelle 2 (Fortsetzung)

| Nr. | Kupplungskomponente | Acylierungsmittel | Diazokomponente | Farbton auf Baumwolle |
|---|---|---|---|---|
| 12 | 2-Amino-5-hydroxynaphthalin-7-sulfonsäure | 4-(β-Chloräthylsulfonyl)-butyrylchlorid gelöst in Dioxan | 4-(4'-Amino-3'-sulfophenylamino)-5-chlor-2,6-difluorpyrimidin | orange |
| 13 | 2-Amino-5-hydroxynaphthalin-7-sulfonsäure | 4-(β-Chloräthylsulfonyl)-butyrylchlorid gelöst in Dioxan | 2-(4'-Amino-2',5'-disulfophenylamino)-4-fluor-6-(β-hydroxyäthylamino)-1,3,5-triazin | orange |
| 14 | 2-Amino-5-hydroxynaphthalin-7-sulfonsäure | 4-(β-Chloräthylsulfonyl)-butyrylchlorid gelöst in Dioxan | 2-(3'-Amino-4'-sulfophenylamino)-4-fluor-6-(2",5"-disulfophenylamino)-1,3,5-triazin | orange |
| 15 | 2-Amino-5-hydroxynaphthalin-7-sulfonsäure | 4-(β-Chloräthylsulfonyl)-butyrylchlorid gelöst in Dioxan | 2-(4'-Amino-2',5'-disulfophenylamino)-4-fluor-6-(2"-chlor-5"-sulfophenylamino)-1,3,5-triazin | orange |
| 16 | 2-Amino-5-hydroxynaphthalin-7-sulfonsäure | 4-(β-Chloräthylsulfonyl)-butyrylchlorid gelöst in Dioxan | 2-(3'-Amino-4'-sulfophenylamino)-4-fluor-6-(N-äthyl-N-phenylamino)-1,3,5-triazin | orange |
| 17 | 2-Amino-5-hydroxynaphthalin-7-sulfonsäure | 4-(β-Chloräthylsulfonyl)-butyrylchlorid gelöst in Dioxan | 2-(3'-Amino-4'-sulfophenylamino)-4-fluor-6-(2"-sulfophenylamino)-1,3,5-triazin | orange |
| 18 | 2-Amino-5-hydroxynaphthalin-7-sulfonsäure | 2,4-Dichlorpyrimidin-5-carbonylchlorid | 4-(4'-Amino-3'-sulfophenylamino)-5-chlor-2,6-difluorpyrimidin | orange |
| 19 | 2-Amino-5-hydroxynaphthalin-7-sulfonsäure | 2,4-Dichlorpyrimidin-5-carbonylchlorid | 2-(4'-Amino-2',5'-disulfophenylamino)-4-fluor-6-(β-hydroxyäthylamino)-1,3,5-triazin | orange |
| 20 | 2-Amino-5-hydroxynaphthalin-7-sulfonsäure | 2,4-Dichlorpyrimidin-5-carbonylchlorid | 2-(3'-Amino-4'-sulfophenylamino)-4-fluor-6-(2",5"-disulfophenylamino)-1,3,5-triazin | orange |
| 21 | 2-Amino-5-hydroxynaphthalin-7-sulfonsäure | 2,4-Dichlorpyrimidin-5-carbonylchlorid | 2-(4'-Amino-2',5'-disulfophenylamino)-4-fluor-6-(2"-chlor-5"-sulfophenylamino)-1,3,5-triazin | orange |
| 22 | 2-Amino-5-hydroxynaphthalin-7-sulfonsäure | 2,4-Dichlorpyrimidin-5-carbonylchlorid | 2-(3'-Amino-4'-sulfophenylamino)-4-fluor-6-(N-äthyl-N-phenylamino)-1,3,5-triazin | orange |
| 23 | 2-Amino-5-hydroxynaphthalin-7-sulfonsäure | 2,4-Dichlorpyrimidin-5-carbonylchlorid | 2-(3'-Amino-4'-sulfophenylamino)-4-fluor-6-(2"-sulfophenylamino)-1,3,5-triazin | orange |
| 24 | 2-Amino-5-hydroxynaphthalin-7-sulfonsäure | 2,4-Dichlorpyrimidin-6-carbonylchlorid | 4-(4'-Amino-3'-sulfophenylamino)-5-chlor-2,6-difluorpyrimidin | orange |
| 25 | 2-Amino-5-hydroxynaphthalin-7-sulfonsäure | 2,4-Dichlorpyrimidin-6-carbonylchlorid | 2-(4'-Amino-2',5'-disulfophenylamino)-4-fluor-6-(β-hydroxyäthylamino)-1,3,5-triazin | orange |
| 26 | 2-Amino-5-hydroxynaphthalin-7-sulfonsäure | 2,4-Dichlorpyrimidin-6-carbonylchlorid | 2-(3'-Amino-4'-sulfophenylamino)-4-fluor-6-(2",5"-disulfophenylamino)-1,3,5-triazin | orange |
| 27 | 2-Amino-5-hydroxynaphthalin-7-sulfonsäure | 2,4-Dichlorpyrimidin-6-carbonylchlorid | 2-(4'-Amino-2',5'-disulfophenylamino)-4-fluor-6-(2"-chlor-5"-sulfophenylamino)-1,3,5-triazin | orange |
| 28 | 2-Amino-5-hydroxynaphthalin-7-sulfonsäure | 2,4-Dichlorpyrimidin-6-carbonylchlorid | 2-(3'-Amino-4'-sulfophenylamino)-4-fluor-6-(2"-sulfophenylamino)-1,3,5-triazin | orange |

Tabelle 2 (Fortsetzung)

| Nr. | Kupplungskomponente | Acylierungsmittel | Diazokomponente | Farbton auf Baumwolle |
|---|---|---|---|---|
| 29 | 2-Amino-5-hydroxynaphthalin-7-sulfonsäure | 2,4-Dichlorpyrimidin-6-carbonylchlorid | 2-(3′-Amino-4′-sulfophenylamino)-4-fluor-6-(N-äthyl-N-phenylamino)-1,3,5-triazin | orange |
| 30 | 2-Amino-5-hydroxynaphthalin-7-sulfonsäure | 2,3-Dichlorchinoxalin-6-carbonylchlorid | 4-(4′-Amino-3′-sulfophenylamino)-5-chlor-2,6-difluorpyrimidin | orange |
| 31 | 2-Amino-5-hydroxynaphthalin-7-sulfonsäure | 2,3-Dichlorchinoxalin-6-carbonylchlorid | 2-(4′-Amino-2′,5′-disulfophenylamino)-4-fluor-6-(β-hydroxyäthylamino)-1,3,5-triazin | orange |
| 32 | 2-Amino-5-hydroxynaphthalin-7-sulfonsäure | 2,3-Dichlorchinoxalin-6-carbonylchlorid | 2-(3′-Amino-4′-sulfophenylamino)-4-fluor-6-(2″,5″-disulfophenylamino)-1,3,5-triazin | orange |
| 33 | 2-Amino-5-hydroxynaphthalin-7-sulfonsäure | 2,3-Dichlorchinoxalin-6-carbonylchlorid | 2-(4′-Amino-2′,5′-disulfophenylamino)-4-fluor-6-(2″-chlor-5″-sulfophenylamino)-1,3,5-triazin | orange |
| 34 | 2-Amino-5-hydroxynaphthalin-7-sulfonsäure | 2,3-Dichlorchinoxalin-6-carbonylchlorid | 2-(3′-Amino-4′-sulfophenylamino)-4-fluor-6-(N-äthyl-N-phenylamino)-1,3,5-triazin | orange |
| 35 | 2-Amino-5-hydroxynaphthalin-7-sulfonsäure | 2,3-Dichlorchinoxalin-6-carbonylchlorid | 2-(3′-Amino-4′-sulfophenylamino)-4-fluor-6-(2″-sulfophenylamino)-1,3,5-triazin | orange |
| 36 | 3-Amino-5-hydroxynaphthalin-7-sulfonsäure | 2,3-Dibrompropionylchlorid | 4-(4′-Amino-3′-sulfophenylamino)-5-chlor-2,6-difluorpyrimidin | rot |
| 37 | 3-Amino-5-hydroxynaphthalin-7-sulfonsäure | 2,3-Dibrompropionylchlorid | 2-(4′-Amino-2′,5′-disulfophenylamino)-4-fluor-6-(β-hydroxyäthylamino)-1,3,5-triazin | rot |
| 38 | 3-Amino-5-hydroxynaphthalin-7-sulfonsäure | 2,3-Dibrompropionylchlorid | 2-(3′-Amino-4′-sulfophenylamino)-4-fluor-6-(2″,5″-disulfophenylamino)-1,3,5-triazin | rotstichig orange |
| 39 | 3-Amino-5-hydroxynaphthalin-7-sulfonsäure | 2,3-Dibrompropionylchlorid | 2-(4′-Amino-2′,5′-disulfophenylamino)-4-fluor-6-(2″-chlor-5″-sulfophenylamino)-1,3,5-triazin | rot |
| 40 | 3-Amino-5-hydroxynaphthalin-7-sulfonsäure | 2,3-Dibrompropionylchlorid | 2-(3′-Amino-4′-sulfophenylamino)-4-fluor-6-(N-äthyl-N-phenylamino)-1,3,5-triazin | rotstichig orange |
| 41 | 3-Amino-5-hydroxynaphthalin-7-sulfonsäure | 2,3-Dibrompropionylchlorid | 2-(3′-Amino-4′-sulfophenylamino)-4-fluor-6-(2″sulfophenylamino)-1,3,5-triazin | rotstichig orange |
| 42 | 3-Amino-5-hydroxynaphthalin-7-sulfonsäure | 4-(β-chloräthylsulfonyl)-butyrylchlorid gelöst in Dioxan | 4-(4′-Amino-3′-sulfophenylamino)-5-chlor-2,6-difluorpyrimidin | rot |
| 43 | 3-Amino-5-hydroxynaphthalin-7-sulfonsäure | 4-(β-chloräthylsulfonyl)-butyrylchlorid gelöst in Dioxan | 2-(4′-Amino-2′,5′-disulfophenylamino)-4-fluor-6-(β-hydroxyäthylamino)-1,3,5-triazin | rot |
| 44 | 3-Amino-5-hydroxynaphthalin-7-sulfonsäure | 4-(β-chloräthylsulfonyl)-butyrylchlorid gelöst in Dioxan | 2-(3′-Amino-4′-sulfophenylamino)-4-fluor-6-(2″,5″-disulfophenylamino)-1,3,5-triazin | rotstichig orange |
| 45 | 3-Amino-5-hydroxynaphthalin-7-sulfonsäure | 4-(β-chloräthylsulfonyl)-butyrylchlorid gelöst in Dioxan | 2-(4′-Amino-2′,5′-disulfophenylamino)-4-fluor-6-(2″-chlor-5″sulfophenylamino)-1,3,5-triazin | rot |

Tabelle 2 (Fortsetzung)

| Nr. | Kupplungskomponente | Acylierungsmittel | Diazokomponente | Farbton auf Baumwolle |
|---|---|---|---|---|
| 46 | 3-Amino-5-hydroxynaphthalin-7-sulfonsäure | 4-(β-chloräthylsulfonyl)-butyrylchlorid gelöst in Dioxan | 2-(3′-Amino-4′-sulfophenylamino)-4-fluor-6-(N-äthyl-N-phenylamino)-1,3,5-triazin | rotstichig orange |
| 47 | 3-Amino-5-hydroxynaphthalin-7-sulfonsäure | 4-(β-chloräthylsulfonyl)-butyrylchlorid gelöst in Dioxan | 2-(3′-Amino-4′-sulfophenylamino)-4-fluor-6-(2″-sulfophenylamino)-1,3,5-triazin | rotstichig orange |
| 48 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-5-(2,3-dibrompropionylamino)-benzol-2-sulfonsäure | rotstichig orange |
| 49 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-5-(2,3-dichlorpropionylamino)-benzol-2-sulfonsäure | rotstichig orange |
| 50 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-5-(4-(β-chloräthylsulfonyl)-butyrylamino)-benzol-2-sulfonsäure | orange |
| 51 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-5-(2′,4′-dichlorpyrimidin-5′-carbonylamino)-benzol-2-sulfonsäure | orange |
| 52 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-3-(4-vinylsulfonyl-butyrylamino)-benzol-4,6-disulfonsäure | orange |
| 53 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-5-(2′,3′-dichlorchinoxalin-6′-carbonylamino)-benzol-2-sulfonsäure | orange |
| 54 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-5-(α-bromacryloylamino)-benzol-2-sulfonsäure | orange |
| 55 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-4-(2,3-dibrompropionylamino)-benzol-2,5-disulfonsäure | orange |
| 56 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-3-(α-bromacryloylamino)-benzol-4,6-disulfonsäure | orange |
| 57 | 2-Amino-5-hydroxynaphthalin-7-sulfonsäure | 2,4-Difluor-6-(2′-sulfophenylamino)-1,3,5-triazin in frischer wässriger Reaktionslösung | 1-Amino-4-(4-(β-chloräthylsulfonyl)-butyrylamino)-benzol-2,5-disulfonsäure | orange |
| 58 | 2-Amino-5-hydroxynaphthalin-7-sulfonsäure | 5-Chlor-2,4,6-trifluorpyrimidin | 1-Amino-5-(2,3-dibrompropionylamino)-benzol-2-sulfonsäure | orange |
| 59 | 2-Amino-5-hydroxynaphthalin-7-sulfonsäure | 5-Chlor-2,4,6-trifluorpyrimidin | 1-Amino-5-(2,3-dichlorpropionylamino)-benzol-2-sulfonsäure | orange |

Tabelle 2 (Fortsetzung)

| Nr. | Kupplungskomponente | Acylierungsmittel | Diazokomponente | Farbton auf Baumwolle |
|---|---|---|---|---|
| 60 | 2-Amino-5-hydroxynaphthalin-7-sulfonsäure | 5-Chlor-2,4,6-trifluorpyrimidin | 1-Amino-5-(4-(β-chloräthylsulfonyl)-butyrylamino)-benzol-2-sulfonsäure | orange |
| 61 | 2-Amino-5-hydroxynaphthalin-7-sulfonsäure | 5-Chlor-2,4,6-trifluorpyrimidin | 1-Amino-5-(2′,4′-dichlorpyrimidin-5′-carbonylamino)-benzol-2-sulfonsäure | orange |
| 62 | 2-Amino-5-hydroxynaphthalin-7-sulfonsäure | 5-Chlor-2,4,6-trifluorpyrimidin | 1-Amino-3-(4-vinylsulfonyl-butyrylamino)-benzol-4,6-disulfonsäure | orange |
| 63 | 2-Amino-5-hydroxynaphthalin-7-sulfonsäure | 5-Chlor-2,4,6-trifluorpyrimidin | 1-Amino-5-(2′,3′-dichlorchinoxalin-6′-carbonylamino)-benzol-2-sulfonsäure | orange |
| 64 | 2-Amino-5-hydroxynaphthalin-7-sulfonsäure | 5-Chlor-2,4,6-trifluorpyrimidin | 1-Amino-5-(α-bromacryloylamino)-benzol-2-sulfonsäure | orange |
| 65 | 2-Amino-5-hydroxynaphthalin-7-sulfonsäure | 5-Chlor-2,4,6-trifluorpyrimidin | 1-Amino-4-(2,3-dibrompropionylamino)-benzol-2,5-disulfonsäure | orange |
| 66 | 2-Amino-5-hydroxynaphthalin-7-sulfonsäure | 5-Chlor-2,4,6-trifluorpyrimidin | 1-Amino-3-(α-bromacryloylamino)-benzol-4,6-disulfonsäure | orange |
| 67 | 2-Amino-5-hydroxynaphthalin-7-sulfonsäure | 5-Chlor-2,4,6-trifluorpyrimidin | 1-Amino-4-(4-(β-chloräthylsulfonyl)-butyrylamino)-benzol-2,5-disulfonsäure | orange |
| 68 | 1-Amino-8-hydroxynaphthalin-3,6-disulfonsäure | 2,3-Dibrompropionylchlorid | 4-(3′-Amino-4′-sulfophenylamino)-5-chlor-2,6-difluorpyrimidin | rot |
| 69 | 1-Amino-8-hydroxynaphthalin-3,6-disulfonsäure | 2,3-Dibrompropionylchlorid | 4-(3′-Amino-4′,6′-disulfophenylamino)-5-chlor-2,6-difluor-pyrimidin | rot |
| 70 | 1-Amino-8-hydroxynaphthalin-3,6-disulfonsäure | 4-(β-Chloräthylsulfonyl)-butyrylchlorid gelöst in Dioxan | 4-(3′-Amino-4′-sulfophenylamino)-5-chlor-2,6-difluorpyrimidin | rot |
| 71 | 1-Amino-8-hydroxynaphthalin-3,6-disulfonsäure | 4-(β-Chloräthylsulfonyl)-butyrylchlorid gelöst in Dioxan | 4-(3′-Amino-4′,6′-disulfophenylamino)-5-chlor-2,6-difluorpyrimidin | rot |

Beispiel 3

31,9 Teile 1-Amino-8-hydroxynaphthalin-3,6-disulfonsäure werden in 800 ml Wasser neutral gelöst und die Lösung auf 0 bis 5°C abgekühlt. Bei dieser Temperatur werden 14,2 Teile 2,4,6-Triflu-or-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 13,3 Teilen N-Äthyl-aminobenzol mit 100 ml Wasser wird der ph der Reaktionsmischung durch ständige Zugabe von 2n Natriumhydroxydlösung zuerst kurze Zeit schwach kongosauer und dann bei 5 bis 6 gehalten. Dabei wird die Temperatur innert 2 bis 3 Stunden auf 20 bis 25°C erhöht. Nach vollständiger Reaktion wird dieses Zwischenprodukt bei 0 bis 10°C und pH 5 mit 40,2 Teilen diazotierter 1-Amino-5-(2,3-dibrompropionylamino)-benzol-2-sulfonsäure gekuppelt. Nach vollständiger Kupplungsreaktion bei pH 7 wird die Reaktionsmischung geklärt und der gebildete Reaktivfarbstoff der Formel

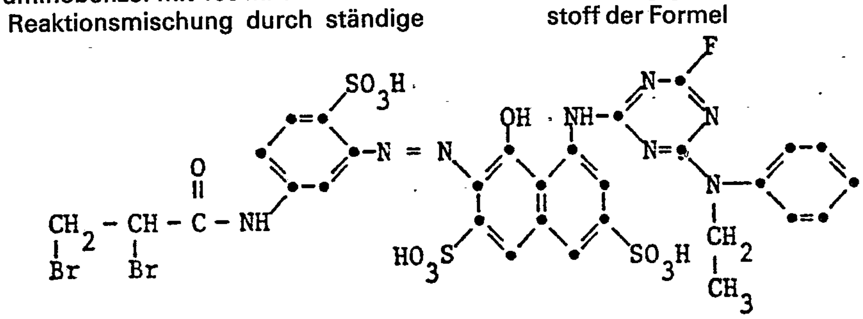

durch Eindampfen oder Gefriertrocknen der Reaktionslösung bei pH 7 isoliert. Er färbt Baumwolle in roten Tönen.

Weitere wertvolle Reaktivfarbstoffe, die Baumwolle in den in Tabelle 3, Spalte 5, angegebenen Farbtönen färben, werden erhalten, wenn man gemäss den Angaben in Beispiel 3 die in Spalte 2 angegebene Kupplungskomponente zuerst mit 2,4,6-Trifluor-1,3,5-triazin und dann mit der in Spalte 3 angegebenen Aminoverbindung umsetzt und auf das so erhaltene Zwischenprodukt die in Spalte 4 angegebene diazotierte Diazokomponente kuppelt.

Tabelle 3

| Nr. | Kupplungskomponente | Aminoverbindung | Diazokomponente | Farbton auf Baumwolle |
|---|---|---|---|---|
| 1 | 1-Amino-8-hydroxynaphthalin-3,6-disulfonsäure | N-Aethyl-aminobenzol | 1-Amino-5-(2,3-dichlorpropionylamino)-benzol-2-sulfonsäure | rot |
| 2 | 1-Amino-8-hydroxynaphthalin-3,6-disulfonsäure | N-Aethyl-aminobenzol | 1-Amino-5-(4-(β-chloräthyl-sulfonyl)-butyrylamino)-benzol-2-sulfonsäure | rot |
| 3 | 1-Amino-8-hydroxynaphthalin-3,6-disulfonsäure | N-Aethyl-aminobenzol | 1-Amino-5-(2′,4′-dichlorpyrimidin-5′-carbonylamino)-benzol-2-sulfonsäure | rot |
| 4 | 1-Amino-8-hydroxynaphthalin-3,6-disulfonsäure | N-Aethyl-aminobenzol | 1-Amino-5-(2′,4′-dichlorpyrimidin-6′-carbonylamino)-benzol-2-sulfonsäure | rot |
| 5 | 1-Amino-8-hydroxynaphthalin-3,6-disulfonsäure | N-Aethyl-aminobenzol | 1-Amino-4-(4-vinylsulfonyl-butyrylamino)-benzol-2,5-disulfonsäure | rot |
| 6 | 1-Amino-8-hydroxynaphthalin-3,6-disulfonsäure | N-Aethyl-aminobenzol | 1-Amino-5-(α-bromacryloylamino)-benzol-2-sulfonsäure | rot |
| 7 | 1-Amino-8-hydroxynaphthalin-3,6-disulfonsäure | N-Aethyl-aminobenzol | 1-Amino-3-(2,3-dibrompropionylamino)-benzol-4,6-disulfonsäure | rot |
| 8 | 1-Amino-8-hydroxynaphthalin-3,6-disulfonsäure | N-Aethyl-aminobenzol | 1-Amino-4-(α-bromacryloylamino)-benzol-2,5-disulfonsäure | rot |
| 9 | 1-Amino-8-hydroxynaphthalin-3,6-disulfonsäure | N-Aethyl-aminobenzol | 1-Amino-3-(4-(β-chloräthylsulfonyl)-butyrylamino)-benzol-4,6-disulfonsäure | rot |
| 10 | 1-Amino-8-hydroxynaphthalin-3,6-disulfonsäure | β-Hydroxy-äthylamin | 1-Amino-5-(2,3-dibrompropionylamino)-benzol-2-sulfonsäure | rot |
| 11 | 1-Amino-8-hydroxynaphthalin-3,6-disulfonsäure | β-Hydroxy-äthylamin | 1-Amino-5-(2,3-dichlorpropionylamino)-benzol-2-sulfonsäure | rot |
| 12 | 1-Amino-8-hydroxynaphthalin-3,6-disulfonsäure | β-Hydroxy-äthylamin | 1-Amino-5-(4-(β-chloräthylsulfonyl)-butyrylamino)-benzol-2-sulfonsäure | rot |
| 13 | 1-Amino-8-hydroxynaphthalin-3,6-disulfonsäure | β-Hydroxy-äthylamin | 1-Amino-5-(2′,4′-dichlorpyrimidin-5′-carbonylamino)-benzol-2-sulfonsäure | rot |
| 14 | 1-Amino-8-hydroxynaphthalin-3,6-disulfonsäure | β-Hydroxy-äthylamin | 1-Amino-4-(4-vinylsulfonyl-butyrylamino)-benzol-2,5-disulfonsäure | rot |
| 15 | 1-Amino-8-hydroxynaphthalin-3,6-disulfonsäure | β-Hydroxy-äthylamin | 1-Amino-5-(2′,3′-dichlorchinoxalin-6′-carbonylamino)-benzol-2-sulfonsäure | rot |
| 16 | 1-Amino-8-hydroxynaphthalin-3,6-disulfonsäure | β-Hydroxy-äthylamin | 1-Amino-5-(α-bromacryloylamino)-benzol-2-sulfonsäure | rot |
| 17 | 1-Amino-8-hydroxynaphthalin-3,6-disulfonsäure | β-Hydroxy-äthylamin | 1-Amino-3-(2,3-dibrompropionylamino)-benzol-4,6-disulfonsäure | rot |
| 18 | 1-Amino-8-hydroxynaphthalin-3,6-disulfonsäure | β-Hydroxy-äthylamin | 1-Amino-4-(α-bromacryloylamino)-benzol-2,5-disulfonsäure | rot |
| 19 | 1-Amino-8-hydroxynaphthalin-3,6-disulfonsäure | β-Hydroxy-äthylamin | 1-Amino-3-(4-(β-chloräthylsulfonyl)-butyrylamino)-benzol-4,6-disulfonsäure | rot |
| 20 | 1-Amino-8-hydroxynaphthalin-3,6-disulfonsäure | β-Sulfo-äthylamin | 1-Amino-5-(2,3-dibrompropionylamino)-benzol-2-sulfonsäure | rot |
| 21 | 1-Amino-8-hydroxynaphthalin-3,6-disulfonsäure | β-Sulfo-äthylamin | 1-Amino-5-(2,3-dichlorpropionylamino)-benzol-2-sulfonsäure | rot |

Tabelle 3 (Fortsetzung)

| Nr. | Kupplungskomponente | Aminoverbindung | Diazokomponente | Farbton auf Baumwolle |
|---|---|---|---|---|
| 22 | 1-Amino-8-hydroxynaphthalin-3,6-disulfonsäure | β-Sulfo-äthylamin | 1-Amino-5-(4-(β-chloräthylsulfonyl)-butyrylamino)-benzol-2-sulfonsäure | rot |
| 23 | 1-Amino-8-hydroxynaphthalin-3,6-disulfonsäure | β-Sulfo-äthylamin | 1-Amino-5-(2',4'-dichlorpyrimidin-5'-carbonylamino)-benzol-2-sulfonsäure | rot |
| 24 | 1-Amino-8-hydroxynaphthalin-3,6-disulfonsäure | β-Sulfo-äthylamin | 1-Amino-5-(2',4'-dichlorpyrimidin-6'-carbonylamino)-benzol-2-sulfonsäure | rot |
| 25 | 1-Amino-8-hydroxynaphthalin-3,6-disulfonsäure | β-Sulfo-äthylamin | 1-Amino-4-(4-vinylsulfonyl-butyrylamino)-benzol-2,5-disulfonsäure | rot |
| 26 | 1-Amino-8-hydroxynaphthalin-3,6-disulfonsäure | β-Sulfo-äthylamin | 1-Amino-5-(α-bromacryloylamino)-benzol-2-sulfonsäure | rot |
| 27 | 1-Amino-8-hydroxynaphthalin-3,6-disulfonsäure | β-Sulfo-äthylamin | 1-Amino-3-(2,3-dibrompropionylamino)-benzol-4,6-disulfonsäure | rot |
| 28 | 1-Amino-8-hydroxynaphthalin-3,6-disulfonsäure | β-Sulfo-äthylamin | 1-Amino-4-(α-bromacryloylamino)-benzol-2,5-disulfonsäure | rot |
| 29 | 1-Amino-8-hydroxynaphthalin-3,6-disulfonsäure | β-Sulfo-äthylamin | 1-Amino-3-(4-(β-chloräthylsulfonyl)-butyrylamino)-benzol-4,6-disulfonsäure | rot |
| 30 | 1-Amino-8-hydroxynaphthalin-3,6-disulfonsäure | Morpholin | 1-Amino-5-(2,3-dibrompropionylamino)-benzol-2-sulfonsäure | rot |
| 31 | 1-Amino-8-hydroxynaphthalin-3,6-disulfonsäure | Morpholin | 1-Amino-5-(2,3-dichlorpropionylamino)-benzol-2-sulfonsäure | rot |
| 32 | 1-Amino-8-hydroxynaphthalin-3,6-disulfonsäure | Morpholin | 1-Amino-5-(4-(β-chloräthylsulfonyl)-butyrylamino)-benzol-2-sulfonsäure | rot |
| 33 | 1-Amino-8-hydroxynaphthalin-3,6-disulfonsäure | Morpholin | 1-Amino-5-(2',4'-dichlorpyrimidin-5'-carbonylamino)-benzol-2-sulfonsäure | rot |
| 34 | 1-Amino-8-hydroxynaphthalin-3,6-disulfonsäure | Morpholin | 1-Amino-5-(2',4'-dichlorpyrimidin-6'-carbonylamino)-benzol-2-sulfonsäure | rot |
| 35 | 1-Amino-8-hydroxynaphthalin-3,6-disulfonsäure | Morpholin | 1-Amino-4-(4-vinylsulfonyl-butyrylamino)-benzol-2,5-disulfonsäure | rot |
| 36 | 1-Amino-8-hydroxynaphthalin-3,6-disulfonsäure | Morpholin | 1-Amino-5-(α-bromacryloylamino)-benzol-2-sulfonsäure | rot |
| 37 | 1-Amino-8-hydroxynaphthalin-3,6-disulfonsäure | Morpholin | 1-Amino-3-(2,3-dibrompropionylamino)-benzol-4,6-disulfonsäure | rot |
| 38 | 1-Amino-8-hydroxynaphthalin-3,6-disulfonsäure | Morpholin | 1-Amino-4-(α-bromacryloylamino)-benzol-2,5-disulfonsäure | rot |
| 39 | 1-Amino-8-hydroxynaphthalin-3,6-disulfonsäure | Morpholin | 1-Amino-3-(4-(β-chloräthylsulfonyl)-butyrylamino)-benzol-4,6-disulfonsäure | rot |
| 40 | 1-Amino-8-hydroxynaphthalin-3,6-disulfonsäure | 1-Amino-2-methylbenzol | 1-Amino-5-(2,3-dibrompropionylamino)-benzol-2-sulfonsäure | rot |
| 41 | 1-Amino-8-hydroxynaphthalin-3,6-disulfonsäure | 1-Amino-2-methylbenzol | 1-Amino-5-(2,3-dichlorpropionylamino)-benzol-2-sulfonsäure | rot |
| 42 | 1-Amino-8-hydroxynaphthalin-3,6-disulfonsäure | 1-Amino-2-methylbenzol | 1-Amino-5-(4-(β-chloräthylsulfonyl)-butyrylamino)-benzol-2-sulfonsäure | rot |
| 43 | 1-Amino-8-hydroxynaphthalin-3,6-disulfonsäure | 1-Amino-2-methylbenzol | 1-Amino-5-(2',4'-dichlorpryrimidin-5'-carbonylamino)-benzol-2-sulfonsäure | rot |
| 44 | 1-Amino-8-hydroxynaphthalin-3,6-disulfonsäure | 1-Amino-2-methylbenzol | 1-Amino-5-(2',4'-dichlorpyrimidin-6'-carbonylamino)-benzol-2-sulfonsäure | rot |
| 45 | 1-Amino-8-hydroxynaphthalin-3,6-disulfonsäure | 1-Amino-2-methylbenzol | 1-Amino-4-(4-vinylsulfonyl-butyrylamino)-benzol-2,5-disulfonsäure | rot |

Tabelle 3 (Fortsetzung)

| Nr. | Kupplungskomponente | Aminoverbindung | Diazokomponente | Farbton auf Baumwolle |
|---|---|---|---|---|
| 46 | 1-Amino-8-hydroxynaphthalin-3,6-disulfonsäure | 1-Amino-2-methylbenzol | 1-Amino-5-(α-bromacryloylamino)-benzol-2-sulfonsäure | rot |
| 47 | 1-Amino-8-hydroxynaphthalin-3,6-disulfonsäure | 1-Amino-2-methylbenzol | 1-Amino-3-(2,3-dibrompropionylamino)-benzol-4,6-disulfonsäure | rot |
| 48 | 1-Amino-8-hydroxynaphthalin-3,6-disulfonsäure | 1-Amino-2-methylbenzol | 1-Amino-4-(α-bromacryloylamino)-benzol-2,5-disulfonsäure | rot |
| 49 | 1-Amino-8-hydroxynaphthalin-3,6-disulfonsäure | 1-Amino-2-methylbenzol | 1-Amino-3-(4-(β-chloräthylsulfonyl)-butyrylamino)-benzol-4,6-disulfonsäure | rot |
| 50 | 2-Amino-5-hydroxynaphthalin-7-sulfonsäure | N-Aethyl-aminobenzol | 1-Amino-5-(2,3-dibrompropionylamino)-benzol-2-sulfonsäure | orange |
| 51 | 2-Amino-5-hydroxynaphthalin-7-sulfonsäure | N-Aethyl-aminobenzol | 1-Amino-5-(2,3-dichlorpropionylamino)-benzol-2-sulfonsäure | orange |
| 52 | 2-Amino-5-hydroxynaphthalin-7-sulfonsäure | N-Aethyl-aminobenzol | 1-Amino-5-(4-(β-chloräthylsulfonyl)-butyrylamino)-benzol-2-sulfonsäure | orange |
| 53 | 2-Amino-5-hydroxynaphthalin-7-sulfonsäure | N-Aethyl-aminobenzol | 1-Amino-5-(2′,4′-dichlorpyrimidin-5′-carbonylamino)-benzol-2-sulfonsäure | orange |
| 54 | 2-Amino-5-hydroxynaphthalin-7-sulfonsäure | N-Aethyl-aminobenzol | 1-Amino-5-(2′,4′-dichlorpyrimidin-6′-carbonylamino)-benzol-2-sulfonsäure | orange |
| 55 | 2-Amino-5-hydroxynaphthalin-7-sulfonsäure | N-Aethyl-aminobenzol | 1-Amino-4-(4-vinylsulfonyl-butyrylamino)-benzol-2,5-disulfonsäure | orange |
| 56 | 2-Amino-5-hydroxynaphthalin-7-sulfonsäure | N-Aethyl-aminobenzol | 1-Amino-5-(α-bromacryloylamino)-benzol-2-sulfonsäure | orange |
| 57 | 2-Amino-5-hydroxynaphthalin-7-sulfonsäure | N-Aethyl-aminobenzol | 1-Amino-3-(2,3-dibrompropionylamino)-benzol-4,6-disulfonsäure | orange |
| 58 | 2-Amino-5-hydroxynaphthalin-7-sulfonsäure | N-Aethyl-aminobenzol | 1-Amino-4-(α-bromacryloylamino)-benzol-2,5-disulfonsäure | orange |
| 59 | 2-Amino-5-hydroxynaphthalin-7-sulfonsäure | N-Aethyl-aminobenzol | 1-Amino-3-(4-(β-chloräthylsulfonyl)-butyrylamino)-benzol-4,6-disulfonsäure | orange |
| 60 | 2-Amino-5-hydroxynaphthalin-7-sulfonsäure | β-Hydroxyäthylamin | 1-Amino-5-(2,3-dibrompropionylamino)-benzol-2-sulfonsäure | orange |
| 61 | 2-Amino-5-hydroxynaphthalin-7-sulfonsäure | β-Hydroxyäthylamin | 1-Amino-5-(2,3-dichlorpropionylamino)-benzol-2-sulfonsäure | orange |
| 62 | 2-Amino-5-hydroxynaphthalin-7-sulfonsäure | β-Hydroxyäthylamin | 1-Amino-5-(4-(β-chloräthylsulfonyl)-butyrylamino)-benzol-2-sulfonsäure | orange |
| 63 | 2-Amino-5-hydroxynaphthalin-7-sulfonsäure | β-Hydroxyäthylamin | 1-Amino-5-(2′,4′-dichlorpyrimidin-5′-carbonylamino)-benzol-2-sulfonsäure | orange |
| 64 | 2-Amino-5-hydroxynaphthalin-7-sulfonsäure | β-Hydroxyäthylamin | 1-Amino-5-(2′,4′-dichlorpyrimidin-6′-carbonylamino)-benzol-2-sulfonsäure | orange |
| 65 | 2-Amino-5-hydroxynaphthalin-7-sulfonsäure | β-Hydroxyäthylamin | 1-Amino-4-(4-vinylsulfonyl-butyrylamino)-benzol-2,5-disulfonsäure | orange |
| 66 | 2-Amino-5-hydroxynaphthalin-7-sulfonsäure | β-Hydroxyäthylamin | 1-Amino-5-(α-bromacryloylamino)-benzol-2-sulfonsäure | orange |
| 67 | 2-Amino-5-hydroxynaphthalin-7-sulfonsäure | β-Hydroxyäthylamin | 1-Amino-3-(2,3-dibrompropionylamino)-benzol-4,6-disulfonsäure | orange |
| 68 | 2-Amino-5-hydroxynaphthalin-7-sulfonsäure | β-Hydroxyäthylamin | 1-Amino-4-(α-bromacryloylamino)-benzol-2,5-disulfonsäure | orange |
| 69 | 2-Amino-5-hydroxynaphthalin-7-sulfonsäure | β-Hydroxyäthylamin | 1-Amino-3-(4-(β-chloräthylsulfonyl)-butyrylamino)-benzol-4,6-disulfonsäure | orange |

Tabelle 3 (Fortsetzung)

| Nr. | Kupplungskomponente | Aminoverbindung | Diazokomponente | Farbton auf Baumwolle |
|---|---|---|---|---|
| 70 | 2-Amino-5-hydroxynaphthalin-7-sulfonsäure | β-Sulfoäthylamin | 1-Amino-5-(2,3-dibrompropionylamino)-benzol-2-sulfonsäure | orange |
| 71 | 2-Amino-5-hydroxynaphthalin-7-sulfonsäure | β-Sulfoäthylamin | 1-Amino-5-(dichlorpropionylamino)-benzol-2-sulfonsäure | orange |
| 72 | 2-Amino-5-hydroxynaphthalin-7-sulfonsäure | β-Sulfoäthylamin | 1-Amino-5-(4-(β-chloräthylsulfonyl)-butyrylamino)-benzol-2-sulfonsäure | orange |
| 73 | 2-Amino-5-hydroxynaphthalin-7-sulfonsäure | β-Sulfoäthylamin | 1-Amino-5-(2',4'-dichlorpyrimidin-5'-carbonylamino)-benzol-2-sulfonsäure | orange |
| 74 | 2-Amino-5-hydroxynaphthalin-7-sulfonsäure | β-Sulfoäthylamin | 1-Amino-5-(2',4'-dichlorpyrimidin-6'-carbonylamino)-benzol-2-sulfonsäure | orange |
| 75 | 2-Amino-5-hydroxynaphthalin-7-sulfonsäure | β-Sulfoäthylamin | 1-Amino-4-(4-vinylsulfonyl-butyrylamino)-benzol-2,5-disulfonsäure | orange |
| 76 | 2-Amino-5-hydroxynaphthalin-7-sulfonsäure | β-Sulfoäthylamin | 1-Amino-5-(α-bromacryloylamino)-benzol-2-sulfonsäure | orange |
| 77 | 2-Amino-5-hydroxynaphthalin-7-sulfonsäure | β-Sulfoäthylamin | 1-Amino-3-(2,3-dibrompropionylamino)-benzol-4,6-disulfonsäure | orange |
| 78 | 2-Amino-5-hydroxynaphthalin-7-sulfonsäure | β-Sulfoäthylamin | 1-Amino-4-(α-bromacryloylamino)-benzol-2,5-disulfonsäure | orange |
| 79 | 2-Amino-5-hydroxynaphthalin-7-sulfonsäure | β-Sulfoäthylamin | 1-Amino-3-(4-(β-chloräthylsulfonyl)-butyrylamino)-benzol-4,6-disulfonsäure | orange |
| 80 | 2-Amino-5-hydroxynaphthalin-7-sulfonsäure | 1-Aminobenzol-3-sulfonsäure | 1-Amino-5-(2,3-dibrompropionylamino)-benzol-2-sulfonsäure | orange |
| 81 | 2-Amino-5-hydroxynaphthalin-7-sulfonsäure | 1-Aminobenzol-3-sulfonsäure | 1-Amino-5-(2,3-dichlorpropionylamino)-benzol-2-sulfonsäure | orange |
| 82 | 2-Amino-5-hydroxynaphthalin-7-sulfonsäure | 1-Aminobenzol-3-sulfonsäure | 1-Amino-5-(4-(β-chloräthylsulfonyl)-butyrylamino)-benzol-2-sulfonsäure | orange |
| 83 | 2-Amino-5-hydroxynaphthalin-7-sulfonsäure | 1-Aminobenzol-3-sulfonsäure | 1-Amino-5-(2',4'-dichlorpyrimidin-5'-carbonylamino)-benzol-2-sulfonsäure | orange |
| 84 | 2-Amino-5-hydroxynaphthalin-7-sulfonsäure | 1-Aminobenzol-3-sulfonsäure | 1-Amino-5-(2',4'-dichlorpyrimidin-6'-carbonylamino)-benzol-2-sulfonsäure | orange |
| 85 | 2-Amino-5-hydroxynaphthalin-7-sulfonsäure | 1-Aminobenzol-3-sulfonsäure | 1-Amino-4-(4-vinylsulfonyl-butyrylamino)-benzol-2,5-disulfonsäure | orange |
| 86 | 2-Amino-5-hydroxynaphthalin-7-sulfonsäure | 1-Aminobenzol-3-sulfonsäure | 1-Amino-5-(α-bromacryloylamino)-benzol-2-sulfonsäure | orange |
| 87 | 2-Amino-5-hydroxynaphthalin-7-sulfonsäure | 1-Aminobenzol-3-sulfonsäure | 1-Amino-3-(2,3-dibrompropionylamino)-benzol-4,6-disulfonsäure | orange |
| 88 | 2-Amino-5-hydroxynaphthalin-7-sulfonsäure | 1-Aminobenzol-3-sulfonsäure | 1-Amino-4-(α-bromacryloylamino)-benzol-2,5-disulfonsäure | orange |
| 89 | 2-Amino-5-hydroxynaphthalin-7-sulfonsäure | 1-Aminobenzol-3-sulfonsäure | 1-Amino-3-(4-(β-chloräthylsulfonyl)-butyrylamino)-benzol-4,6-disulfonsäure | orange |
| 90 | 2-Amino-5-hydroxynaphthalin-7-sulfonsäure | 1-Amino-2-methylbenzol | 1-Amino-5-(2,3-dibrompropionylamino)-benzol-2-sulfonsäure | orange |
| 91 | 2-Amino-5-hydroxynaphthalin-7-sulfonsäure | 1-Amino-2-methylbenzol | 1-Amino-5-(2,3-dichlorpropionylamino)-benzol-2-sulfonsäure | orange |
| 92 | 2-Amino-5-hydroxynaphthalin-7-sulfonsäure | 1-Amino-2-methylbenzol | 1-Amino-5-(4-(β-chloräthylsulfonyl)-butyrylamino)-benzol-2-sulfonsäure | orange |
| 93 | 2-Amino-5-hydroxynaphthalin-7-sulfonsäure | 1-Amino-2-methylbenzol | 1-Amino-5-(2',4'-dichlorpyrimidin-5'-carbonylamino)-benzol-2-sulfonsäure | orange |

Tabelle 3 (Fortsetzung)

| Nr. | Kupplungskomponente | Aminoverbindung | Diazokomponente | Farbton auf Baumwolle |
|---|---|---|---|---|
| 94 | 2-Amino-5-hydroxynaphthalin-7-sulfonsäure | 1-Amino-2-methylbenzol | 1-Amino-5-(2',4'-dichlorpyrimidin-6'-carbonylamino)-benzol-2-sulfonsäure | orange |
| 95 | 2-Amino-5-hydroxynaphthalin-7-sulfonsäure | 1-Amino-2-methylbenzol | 1-Amino-4-(4-vinylsulfonyl-butyrylamino)-benzol-2,5-disulfonsäure | orange |
| 96 | 2-Amino-5-hydroxynaphthalin-7-sulfonsäure | 1-Amino-2-methylbenzol | 1-Amino-5-(α-bromacryloylamino)-benzol-2-sulfonsäure | orange |
| 97 | 2-Amino-5-hydroxynaphthalin-7-sulfonsäure | 1-Amino-2-methylbenzol | 1-Amino-3-(2,3-dibrompropionylamino)-benzol-4,6-disulfonsäure | orange |
| 98 | 2-Amino-5-hydroxynaphthalin-7-sulfonsäure | 1-Amino-2-methylbenzol | 1-Amino-4-(α-bromacryloylamino)-benzol-2,5-disulfonsäure | orange |
| 99 | 2-Amino-5-hydroxynaphthalin-7-sulfonsäure | 1-Amino-2-methylbenzol | 1-Amino-3-(4-(β-chloräthylsulfonyl)-butyrylamino)-benzol-4,6-disulfonsäure | orange |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen

Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

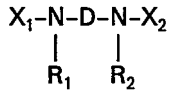

(1),

worin D der Rest eines Farbstoffes der Mono- oder Polyazo- oder Metallkomplexazo-Reihe, $R_1$ und $R_2$ unabhängig voneinander Wasserstoff oder ein gegebenenfalls substituierter $C_{1-4}$-Alkylrest, $X_1$ der 2,4-Difluor-5-chlorpyrimidin-Rest oder ein Rest der Formel

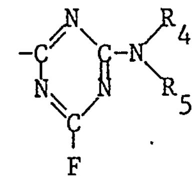

(B) ,

worin $R_4$ und $R_5$ unabhängig voneinander Wasserstoff, $C_{1-4}$-Alkyl, das gegebenenfalls durch Halogen, Cyan, $C_{1-4}$-Alkoxy, Hydroxy, Carboxy, Sulfo oder Sulfato substituiert ist, Benzyl, Phenäthyl, Cyclohexyl, Phenyl, das gegebenenfalls durch Halogen, Nitro, Cyan, Trifluormethyl, Sulfamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo substituiert ist, oder Naphthyl, das gegebenenfalls durch Halogen, Nitro, $C_{1-4}$-Alkoxy, $C_{1-4}$-Alkanoylamino, Hydroxy, Carboxy oder Sulfo substituiert ist, oder worin $R_4$ und $R_5$ zusammen mit dem Aminostickstoffatom einen Morpholino-, Piperidino- oder Piperazinorest bilden, oder worin $-NR_4R_5$ Hydrazino oder Semicarbazido ist, wobei der Rest $-N(R_1)X_1$ direkt an ein Ringkohlenstoffatom von D gebunden ist, und $X_2$ 2,3-Dibrompropionyl, 2,3-Dichlorpropinonyl, α-Bromacryloyl, α-Chloracryloyl, 4-(β-Chloräthylsulfonyl)-butyryl, 4-Vinylsulfonylbutyryl, 2,4-Dichlorpyrimidin-5-carbonyl, 2,4-Dichlorpyrimidin-6-carbonyl oder 2,3-Dichlorchinoxalin-6-carbonyl ist.

2. Reaktivfarbstoffe gemäss Anspruch 1, worin D der Rest eines Mono- oder Disazofarbstoffes oder eines Metallkomplexazofarbstoffes ist.

3. Reaktivfarbstoffe gemäss Anspruch 2, der Formel

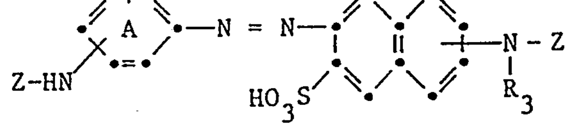

(2) ,

worin die beiden Reste Z alternativ $X_1$ oder $X_2$ sind, und $X_1$ und $X_2$ die für Anspruch 2 geltenden Bedeutungen haben, $R_3$ Wasserstoff, Methyl oder Äthyl ist, und der Benzolring A gegebenenfalls weitersubstituiert ist.

4. Reaktivfarbstoffe gemäss Anspruch 2, der Formel

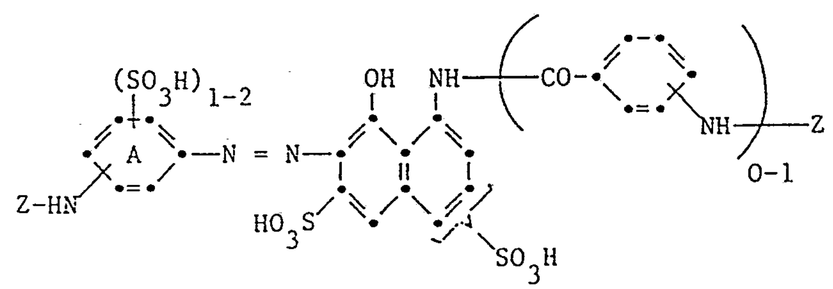

(3) ,

worin die beiden Reste Z alternativ $X_1$ oder $X_2$ sind, und $X_1$ und $X_2$ die für Anspruch 2 geltenden Bedeutungen haben, und der Benzolring A gegebenenfalls weitersubstituiert ist.

5. Reaktivfarbstoffe gemäss Anspruch 3, worin der Benzolring A nicht weitersubstituiert ist.

6. Reaktivfarbstoffe gemäss Anspruch 3, worin $R_3$ Wasserstoff, Methyl oder Äthyl ist.

7. Reaktivfarbstoffe gemäss Anspruch 4, worin der Benzolring A nicht weitersubstituiert ist.

8. Reaktivfarbstoffe gemäss Anspruch 2, der Formel

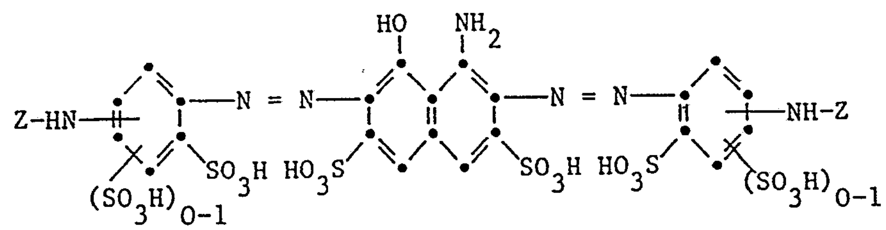

(4) ,

worin die beiden Reste Z alternativ $X_1$ oder $X_2$ sind, und $X_1$ und $X_2$ die für Anspruch 2 geltenden Bedeutungen haben.

9. Reaktivfarbstoffe gemäss Anspruch 1, worin $X_1$ ein Rest der Formel (B) ist, worin $-NR_4R_5$ die Bedeutungen $NH_2$, N-β-Hydroxyäthylamino, N,N-Di-β-hydroxyäthylamino, β-Sulfoäthylamino, Hydrazino, Semicarbazido, Phenylamino, das gegebenenfalls im Phenylkern durch Chlor, Methyl, Äthyl, Methoxy, Äthoxy, Acetylamino, Hydroxy, Carboxy, Sulfomethyl oder Sulfo substituiert ist, N-$C_{1-4}$-Alkyl-N-phenylamino, das gegebenenfalls im Phenylkern durch Chlor, Methyl oder Äthyl substituiert ist, N-Sulfo-$C_{1-4}$-alkyl-N-phenylamino, das gegebenenfalls im Phenylkern durch Chlor-, Methyl- oder Äthyl substituiert ist, N-Hydroxy-$C_{1-4}$-alkyl-phenylamino oder Sulfonaphthylamino hat, oder $X_1$ ein 2,4-Difluor-5-chlorpyrimidyl-(6)-Rest ist, und $X_2$ ein α,β-Dibrompropionyl-, α-Bromacryloyl-, 4-(β-Chloräthylsulfonyl)-butyryl- oder Vinylsulfonylbutyryl-Rest ist.

10. Verfahren zur Herstellung von Reaktivfarbstoffen gemäss Anspruch 1, dadurch gekennzeichnet, dass man Farbstoffe der Formel

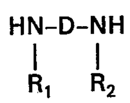

oder ihre Vorprodukte mit Raktivkomponenten zur Einführung der Reste $X_1$ und $X_2$, worin $R_1$, $R_2$, D, $X_1$ und $X_2$ die angegebenen Bedeutungen haben, zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

11. Verwendung der Rektivfarbstoffe gemäss Anspruch 1 zum Färben oder Bedrucken von cellulosehaltigen Fasermaterialien.

12. Verwendung gemäss Anspruch 11, dadurch gekennzeichnet, dass man Baumwolle färbt oder bedruckt.

## Claims

1. Reactive dyes of the formula

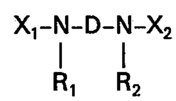

(1)

in which D is a radical of a dye of the monoazo or polyazo or metal complex azo series, $R_1$ and $R_2$, independently of one another, are each hydrogen or a substituted or unsubstituted $C_{1-4}$-alkyl radical, $X_1$ is the 2,4-difluoro-5-chloropyrimidine radical or a radical of the formula

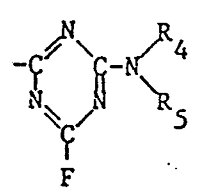

(B) ,

in which $R_4$ and $R_5$, independently of one another, are each hydrogen, $C_{1-4}$-alkyl which is unsubstituted or substituted by halogen, cyano, $C_{1-4}$-alkoxy, hydroxyl, carboxyl, sulfo or sulfato, benzyl, phenethyl, cyclohexyl, phenyl which is unsubstituted or substituted by halogen, nitro, cyano, trifluoromethyl, sulfamoyl, carbamoyl, $C_{1-4}$-alkyl, $C_{1-4}$-alkoxy, $C_{1-4}$-alkanoylamino, benzoylamino,

ureido, hydroxyl, carboxyl, sulfomethyl or sulfo, or naphthyl which is unsubstituted or substituted by halogen, nitro, $C_{1-4}$-alkoxy, $C_{1-4}$-alkanoylamino, hydroxyl, carboxyl or sulfo, or in which $R_4$ and $R_5$, together with the amino nitrogen atom, are a morpholino, piperidino or piperazino radical, or in which $-NR_4R_5$ is hydrazino or semicarbazido, the $-N(R_1)X_1$ radical being bonded directly to a ring carbon atom of D, and $X_2$ is 2,3-dibromopropionyl, 2,3-dichloropropionyl, α-bromoacryloyl, α-chloroacryloyl, 4-(β-chloroethylsulfonyl)-butyryl, 4-vinylsulfonylbutyryl, 2,4-dichloropyrimidine-5-carbonyl, 2,4-dichloropyrimidine-6-carbonyl or 2,3-dichloroquinoxaline-6-carbonyl.

2. Reactive dyes according to Claim 1 in which D is the radical of a monoazo or disazo dye or of a metal complex azo dye.

3. Reactive dyes according to Claim 2 of the formula

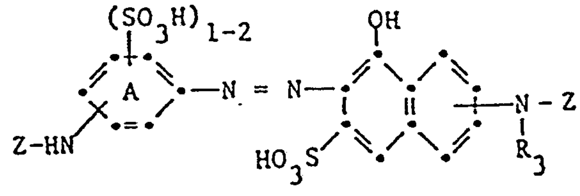

(2) ,

in which the two Z radicals are alternatively $X_1$ or $X_2$, $X_1$ and $X_2$ having the meanings applicable for Claim 2, $R_3$ is hydrogen, methyl or ethyl, and the benzene ring A can be further substituted.

4. Reactive dyes according to Claim 2 of the formula

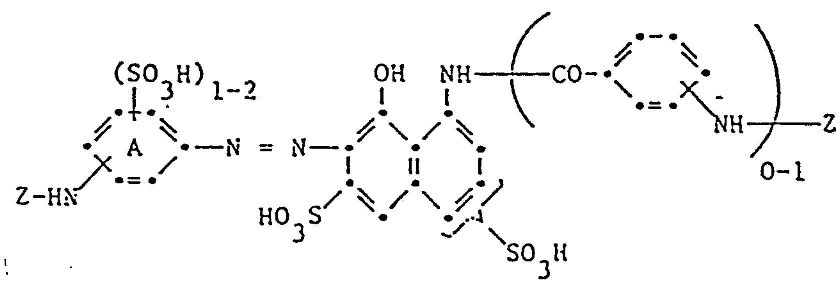

(3) ,

in which the two Z radicals are alternatively $X_1$ or $X_2$, $X_1$ and $X_2$ having the meanings applicable for Claim 2, and the benzene ring A can be further substituted.

5. Reactive dyes according to Claim 3 in which the benzene ring A is not further substituted.

6. Reactive dyes according to Claim 3 in which $R_3$ is hydrogen, methyl or ethyl.

7. Reactive dyes according to Claim 4 in which the benzene ring A is not further substituted.

8. Reactive dyes according to Claim 2 of the formula

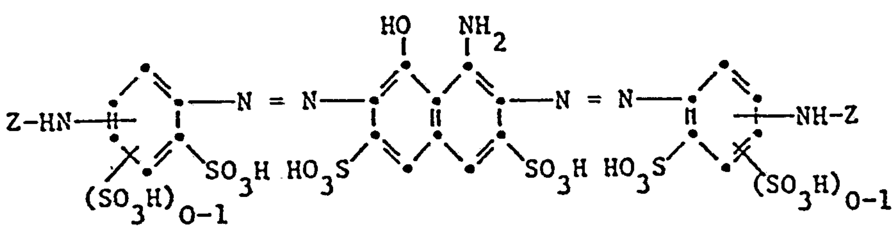

(4) ,

in which the two Z radicals are alternatively $X_1$ or $X_2$, $X_1$ and $X_2$ having the meanings applicable for Claim 2.

9. Reactive dyes according to Claim 1 in which $X_1$ is a radical of the formula (B) in which $-NR_4R_5$ is $NH_2$, N-β-hydroxyethylamino, N,N-di-β-hydroxyethylamino, β-sulfoethylamino, hydrazino, semicarbazido, phenylamino which is unsubstituted or substituted in the phenyl nucleus by chlorine, methyl, ethyl, methoxy, ethoxy, acetylamino, hydroxyl, carboxyl, sulfomethyl or sulfo, N-$C_{1-4}$-alkyl-N-phenylamino which is unsubstituted or substituted in the phenyl nucleus by chlorine, methyl or ethyl, N-sulfo-$C_{1-4}$-alkyl-N-phenylamino which is unsubstituted in the phenyl nucleus or substituted by chlorine, methyl or ethyl, N-hydroxy-$C_{1-4}$-alkyl-phenylamino or sulfonaphthylamino, or $X_1$ is a 2,4-difluoro-5-chloropyramid-6-yl radical and $X_2$ is an α,β-dibromopropionyl, α-bromoacryloyl, 4-(β-chloroethylsulfonyl)-butyryl or 4-vinylsulfonylbutyryl radical.

10. A process for preparing reactive dyes according to Claim 1, which comprises converting dyes of the formula

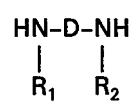

or their precursors with reactive components for introducing the radicals $X_1$ and $X_2$, wherein $R_1$, $R_2$, D, $X_1$ and $X_2$ have the meanings specified, into reactive dyes of the formula (1), or converting the reactive intermediates obtained into the desired end dyes, and if desired then performing a further conversion reaction.

11. The use of reactive dyes according to Claim 1 for dyeing or printing cellulose-containing fibre materials.

12. The use according to Claim 11 for dyeing and printing cotton.

**Revendications**

1. Colorants réactifs de formule

$$X_1-\underset{R_1}{\underset{|}{N}}-D-\underset{R_2}{\underset{|}{N}}-X_2 \qquad (1)$$

dans laquelle D est le reste d'un colorant de la série mono- ou polyazoïque ou azoïque à complexe métallique, $R_1$ et $R_2$ représentent, indépendamment l'un de l'autre, un atome d'hydrogène ou un reste alkyle en $C_{1-4}$ éventuellement substitué, $X_1$ est le radical 2,4-difluoro-5-chloro-pyrimidine ou un radical de formule

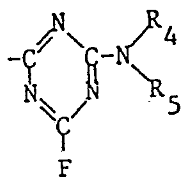

(B)

dans laquelle $R_4$ et $R_5$ représentent, indépendamment l'un de l'autre, un atome d'hydrogène ou un radical alkyle en $C_{1-4}$ qui est éventuellement substitué par un atome d'halogène ou par un groupe cyano, alcoxy en $C_{1-4}$, hydroxyle, carboxyle, sulfo ou sulfato, un radical benzyle, phénétyle, cyclohexyle, phényle, qui est éventuellement substitué par un atome d'halogène ou par un groupe nitro, cyano, trifluorométhyle, sulfamyle, carbamyle, alkyle en $C_{1-4}$, alcoxy en $C_{1-4}$, alcanoyl ($C_{1-4}$)-amino, benzoylamino, uréido, hydroxyle, carboxyle, sulfométhyle ou sulfo, ou un radical naphtyle qui est éventuellement substitué par un atome d'halogène ou par un groupe nitro, alcoxy en $C_{1-4}$, alcanoyl($C_{1-4}$)-amino, hydroxyle, carboxyle ou suflo; ou dans laquelle $R_4$ et $R_5$ forment, conjointement avec l'atome d'azote en fonction amine, un radical morpholino, pipéridino ou pipérazino; ou dans laquelle $-NR_4R_5$ est le radical hydrazino ou semi-carbazido; le reste $-N(R_1)X_1$ étant lié directement à un atome de carbone nucléaire de D; et $X_2$ est le radical 2,3-dibromopropionyle, 2,3-dichloropropionyle, α-bromoacryloyle, α-chloroacryloyle, 4-(β-chloréthylsulfonyl)-butyryle, 4-vinylsulfonylbutyryle, 2,4-dichloropyrimidine-5-carbonyle, 2,4-dichloropyrimidine-6-carbonyle ou 2,3-dichloroquinoxaline-6-carbonyle.

2. Colorants réactifs selon la revendication 1, dans lesquels D est le reste d'un colorant mono- ou disazoïque, ou d'un colorant azoïque à complexe métallique.

3. Colorants réactifs selon la revendication 1, de formule

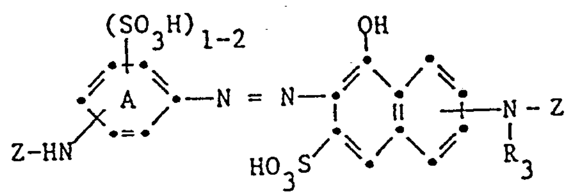

(2)

dans laquelle les deux restes Z sont l'un $X_1$ et l'autre $X_2$, et $X_1$ et $X_2$ ont les significations valables pour la revendication 2, $R_3$ est un atome d'hydrogène ou le groupe méthyle ou éthyle, et le noyau benzénique A est éventuellement substitué davantage.

4. Colorants réactifs selon la revendication 2, de formule

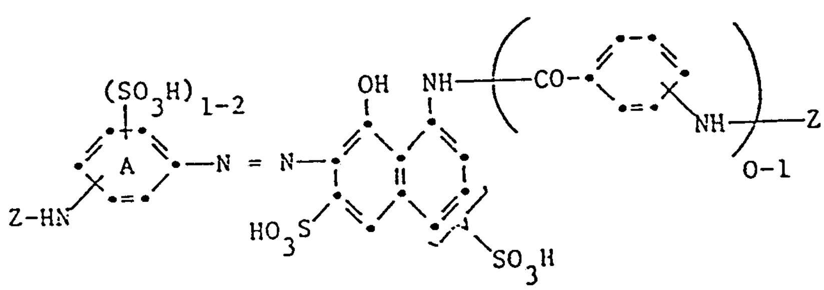

(3)

dans laquelle les deux restes Z sont l'un $X_1$ et l'autre $X_2$, et $X_1$ et $X_2$ ont les significations valables pour la revendication 2, et le noyau benzénique A est éventuellement substitué davantage.

5. Colorants réactifs selon la revendication 3, dans lesquels le noyau benzénique A n'est pas substitué davantage.

6. Colorants réactifs selon la revendication 3,

dans lesquels $R_3$ est un atome d'hydrogène ou le groupe méthyle ou éthyle.

7. Colorants réactifs selon la revendication 4, dans lesquels le noyau benzénique A n'est pas substitué davantage.

8. Colorants réactifs selon la revendication 2, de formule

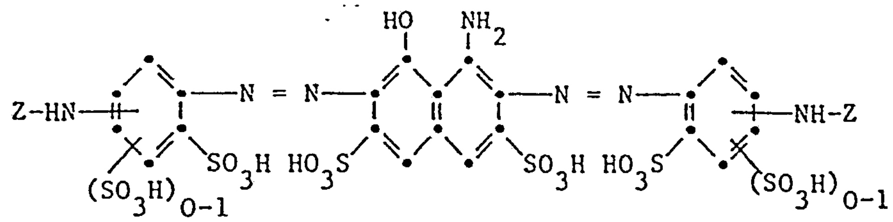

(4)

dans laquelle les deux restes Z sont l'un $X_1$ et l'autre $X_2$, et $X_1$ et $X_2$ ont les significations valables pour la revendication 2.

9. Colorants réactifs selon la revendication 1, dans lesquels $X_1$ est un reste de formule (B) dans lequel $-NR_4R_5$ représente $NH_2$ ou le radical N-β-hydroxyéthylamino, N,N,-di-β-hydroxyéthylamino, β-sulfoéthylamino, hydrazino, semicarbazido, phénylamino qui est éventuellement substitué sur le noyau phényle par un atome de chlore ou par un groupe méthyle, éthyle, méthoxy, éthoxy, acétylamino, hydroxyle, carboxyle, sulfométhyle ou sulfo, un radical N-alkyl($C_{1-4}$)-N-phénylamino qui est éventuellement substitué sur le noyau phényle par un atome de chlore ou par le groupe méthyle ou éthyle, un radical N-sulfoalkyl($C_{1-4}$)-N-phénylamino qui est éventuellement substitué sur le noyau phényle par un atome de chlore ou par le groupe méthyle ou éthyle, un radical N-hydroxyalkyl($C_{1-4}$)-phénylamino ou sulfonaphtylamino; ou $X_1$ est le reste 2,4-difluoro-5-chloropyrimidyle-(6) et $X_2$ est le reste α,β-dibromopropionyle, α-bromoacryloyle, 4-(β-chloréthylsulfonyl)-butyryle ou 4-vinylsulfonylbutyryle.

10. Procédé pour la préparation des colorants réactifs selon la revendication 1, caractérisé par le fait que l'on fait réagir des colorants de formule

$$\begin{array}{c} HN-D-NH \\ | \quad\quad | \\ R_1 \quad\; R_2 \end{array}$$

ou leurs précurseurs, avec des composants réactifs pour l'introduction des radicaux $X_1$ et $X_2$, $R_1$, $R_2$, D, $X_1$ et $X_2$ ayant les significations données, pour aboutir aux colorants réactifs de formule (1), ou on transforme les produits intermédiaires obtenus en les colorants finals recherchés, et éventuellement on effectue ensuite une nouvelle réaction de conversion.

11. Utilisation des colorants réactifs selon la revendication 1, pour la teinture ou l'impression de matériaux fibreux cellulosiques.

12. Utilisation selon la revendication 11, caractérisée par le fait que l'on teint ou imprime du coton.